# EUROPEAN PATENT APPLICATION

(11) **EP 2 211 411 A1**
(43) Date of publication of application: **28.07.2010**
(21) Application number: 08837486.3
(22) Date of filing: 08.10.2008
(51) Int. Cl.: H01M 8/04, H01M 8/06, H01M 8/10

(54) **FUEL CELL SYSTEM**

(30) Priority: 11.10.2007 JP 2007265924
(71) Applicant: Panasonic Corporation, Kadoma-shi Osaka 571-8501 (JP)
(72) Inventor: The designation of the inventor has not yet been filed
(74) Representative: Leinweber & Zimmermann
(86) International application number: PCT/JP2008/002845
(87) International publication number: WO 2009/047897

(57) **Abstract**

A fuel cell system of the present invention includes: a fuel cell (1) configured to generate electric power using a fuel gas and an oxidizing gas; a hydrogen generator (2) having a reformer (71) configured to generate a hydrogen-containing fuel gas from a raw material and steam; a cooling water passage (4) through which cooling water for cooling down the fuel cell (1) flows; a cooling water tank (5) configured to store the cooling water; a recovered water tank (7) configured to store water recovered from the fuel gas and the oxidizing gas discharged from the fuel cell (1); a first water passage (8) connecting the recovered water tank (7) and the reformer (71); a purifier (10) disposed on the first water passage (8); a second water passage (11) branching from the first water passage (8) located downstream of the purifier (10) and connected to the cooling water tank 85); and a first pump (9) configured to feed the water from the recovered water tank (7) to the first water passage (8).

## Description

### Technical Field

The present invention relates to a fuel cell system including: a hydrogen generator configured to generate a hydrogen-rich fuel gas by using steam and a raw material, such as a city gas, an LP gas, or methanol, containing an organic compound formed by at least carbon and hydrogen; and a fuel cell configured to generate electric power by using the hydrogen-rich fuel gas and an oxidizing gas.

### Background Art

A fuel cell system includes: a hydrogen generator having a reformer which carries out steam reforming of a raw material, such as a city gas or an LP gas, to generate a hydrogen-rich fuel gas; and a fuel cell which carries out an electrochemical reaction between the fuel gas generated in the hydrogen generator and an oxidizing gas to generate electric power. Reforming water is supplied to the reformer, and becomes steam inside the reformer. The steam is used for reforming of the raw material. Moreover, cooling water is supplied to the fuel cell to keep a constant temperature of the fuel cell which has generated heat at the time of electric power generation. Then, used as the reforming water and the cooling water are water (hereinafter referred to as "recovered water") recovered from the fuel gas and the oxidizing gas discharged from the fuel cell.

In a case where impurities, such as metal ions or sulfur constituents, or the like get mixed in the reforming water, and such reforming water is supplied to the hydrogen generator, the reforming catalyst deteriorates, and its life is significantly shortened. Moreover, if the reforming catalyst deteriorates, the amount of hydrogen required for electric power generation of the fuel cell may not be generated, and the system may stop. Moreover, the amount of carbon monoxide generated as byproduct in a steam-reforming reaction may increase, and a platinum catalyst of an electrode of the fuel cell may deteriorate by poisoning. Thus, the performance and life of the fuel cell may significantly deteriorate. Therefore, quality control of the water used as the reforming water is extremely important for the entire fuel cell system. On this account, to prevent the impurity derived from the recovered water from getting mixed in the reforming water, it is necessary to provide a complex configuration or controller for maintaining and managing the purity of the water. In addition, in a case where a cooling water system which utilizes the recovered water supplies the reforming water, materials used for the cooling water system and the like are limited.

To solve the above problems, water is first caused to flow through a purifier, such as an ion-exchange resin, to remove the metal ions and the impurities in the water. Then, the water from which the impurities and the like are removed is separately stored in a first water storage portion and a second water storage portion as the reforming water and the cooling water. Thus, the impurities are prevented from getting mixed in the reforming water (see Patent Document 1 for example).

Fig. 15 is a configuration diagram of a conventional fuel cell system described in Patent Document 1.

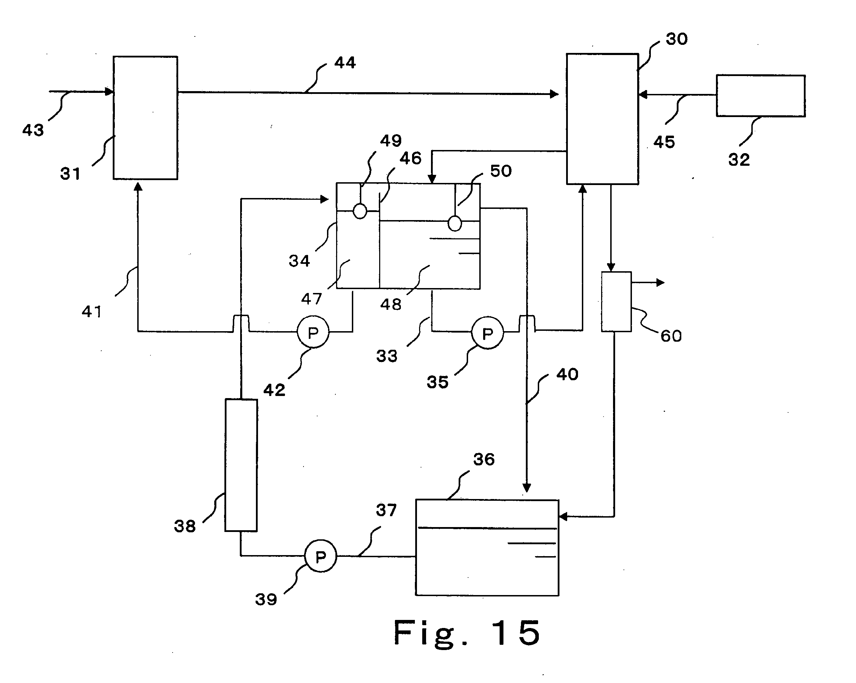

As shown in Fig. 15, the fuel cell system includes: a fuel cell 30 which uses a hydrogen-containing fuel gas and an oxygen-containing oxidizing gas to generate electric power; a hydrogen generator 31 incorporating a reformer which generates a hydrogen-rich fuel gas by a steam-reforming reaction; a material supplying passage 43 through which a material gas, such as a city gas, is supplied to the hydrogen generator 31; an oxidizing gas supplier 32 which supplies the oxidizing gas to the fuel cell 30; and a fuel gas supplying passage 44 through which the hydrogen-rich fuel gas generated by the hydrogen generator 31 is supplied to the fuel cell 30.

Moreover, the fuel cell system further includes: a cooling water passage 33 through which the cooling water for cooling down the fuel cell 30 flows; a cooling water tank 34 which stores the cooling water; and a second pump 35 which supplies the water in the cooling water tank 34 through the cooling water passage 33 to the fuel cell 30. Further, the fuel cell system further includes: a recovered water tank 36 which stores water recovered from the oxidizing gas discharged from the fuel cell 30; a second water passage 37 which connects the recovered water tank 36 and the cooling water tank 34; a purifier 38 which purifies the water flowing through the second water passage 37; a water supplying pump 39 which supplies the water from the recovered water tank 36 through the second water passage 37 to the cooling water tank 34; a water returning passage 40 through which the water in the cooling water tank 34 returns to the recovered water tank 36; a first water passage 41 which connects the cooling water tank 34 and the hydrogen generator 31; and a reforming water pump 42 which supplies the reforming water from the cooling water tank 34 through the first water passage 41 to the hydrogen generator 31.

When the system is operating, the raw material, such as the city gas, is supplied through the material supplying passage 43 to the hydrogen generator 31, and the reforming water is supplied through the first water passage 41 to the hydrogen generator 31. With this, the hydrogen generator 31 carries out the steam reforming of the raw material to generate the hydrogen-rich fuel gas. Then, the fuel gas is supplied through the fuel gas supplying passage 44 to the fuel cell 30, and the fuel cell 30 carries out an electrochemical reaction between the fuel gas and the oxidizing gas supplied from the oxidizing gas supplier 32 through an oxidizing gas supplying passage 45 to the fuel cell 30. Thus, the fuel cell 30 generates electricity and heat. This heat of the fuel cell 30 is recovered by the cooling water flowing through the fuel cell 30, so that the fuel cell 30 is maintained at a constant temperature.

Moreover, the oxidizing gas which has not been used for the reaction in the fuel cell 30 is supplied to a water condenser 60. Moisture in the oxidizing gas is condensed, and the condensed water is stored in the recovered water tank 36 as the recovered water. The recovered water stored in the recovered water tank 36 is supplied through the purifier 38 on the second water passage 37 to the cooling water tank 34 by the water supplying pump 39, and is utilized as the reforming water and the cooling water.

Moreover, the cooling water tank 34 is divided into a first water storage portion 47 and a second water storage portion 48 by a dividing wall 46. The water in the first water storage portion 47 is supplied through the first water passage 41 to the hydrogen generator 31 by the reforming water pump 42 as a source of steam for the reforming reaction. Moreover, the water in the second water storage portion 48 is supplied through the cooling water passage 33 to the fuel cell 30 by the second pump 35. The water is supplied through the second water passage 37 to the first water storage portion 47, and the water supplied to the first water storage portion 47 flows over the dividing wall 46 to be supplied to the second water storage portion 48.

Moreover, a first water level detector 49 is provided in the first water storage portion 47, and a second water level detector 50 is provided in the second water storage portion 48. The operation of the water supplying pump 39 is carried out by ON and OFF signals of the first water level detector 49 or ON and OFF signals of the second water level detector 50. Moreover, set positions of the ON and OFF signals of the first water level detector 49 and set positions of the ON and OFF signals of the second water level detector 50 are adjusted such that the water level of the second water storage portion 48 becomes lower than that of the first water storage portion 47. Further, the height of the dividing wall 46 is set to be higher than the position of a connection portion where the water returning passage 40 is connected to the cooling water tank 34. Therefore, the water in the second water storage portion 48 does not flow over the dividing wall 46 to flow backward to the first water storage portion 47.

With this, it is possible to prevent the impurities of the cooling water system from getting mixed in the reforming water, and the water purified in the purifier 38 can be supplied as the reforming water. Therefore, it is possible to prevent the reforming catalyst from deteriorating. Moreover, since it is unnecessary to use a special material for the cooling water passage 33, the degree of freedom of selection of the material increases.

Moreover, proposed is a fuel cell system in which: the recovered water recovered from an unreacted gas discharged from the fuel cell is purified by a purifier, such as an ion-exchange resin, and is then stored; and the stored water is supplied as the reforming water of the hydrogen generator and the cooling water of the fuel cell by separate pumps (see Patent Document 2 for example).
Patent Document 1: Japanese Laid-Open Patent Application Publication 2006-40553
Patent Document 2: Japanese Laid-Open Patent Application Publication 2005-243623

### Disclosure of the Invention

### Problems to be Solved by the Invention

However, in the fuel cell system described in Patent Document 1, since water tanks are provided for the reforming water and the cooling water which is likely to contain the impurities to prevent the cooling water from getting mixed in the reforming water, the volumes of the water tanks are large, and many water level detectors are required to manage the water levels of respective tanks. Moreover, a plurality of water passages, such as the second water passage, the first water passage, and the cooling water passage, are formed in the system, and each passage requires a pump for supplying the water. Moreover, the fuel cell system described in Patent Document 2 requires two pumps to supply the recovered water to the cooling water system and a reforming water system. These are problems for the purpose of reducing the size and cost of the system.

The present invention was made in consideration of the above problems, and an object of the present invention is to provide a fuel cell system configured such that tanks are not separately provided to separate a cooling water system and a reforming water system, and the number of pumps for supplying water to the cooling water system and the reforming water system is smaller than before, and capable of preventing impurities of the cooling water system from getting mixed in reforming water.

### Means for Solving the Problems

To achieve the above object, a first invention of the present invention is a fuel cell system including: a hydrogen generator having a reformer configured to generate a hydrogen-containing fuel gas from a raw material and steam; a fuel cell configured to generate electric power using the fuel gas supplied from the hydrogen generator and an oxidizing gas; a cooling water passage through which cooling water for cooling down the fuel cell flows; a cooling water tank configured to store the cooling water; a recovered water tank configured to store water recovered from at least one of the fuel gas and the oxidizing gas discharged from the fuel cell; a first water passage connecting the recovered water tank and the reformer; a second water passage branching from the first water passage and connected to the cooling water tank; and a water feeding device disposed on the first water passage so as to be located upstream of a branch portion where the second water passage branches from the first water passage, wherein the water feeding device operates to supply water from the recovered water tank to the reformer or the cooling water tank.

A second invention of the present invention is the fuel cell system according to the first invention, further including a flow divider configured to divide the water supplied from the recovered water tank into water supplied to the first water passage and water supplied to the second water passage, wherein the flow divider is configured to divide the water into the water supplied to the first water passage and the water supplied to second water passage at a predetermined water dividing ratio.

A third invention of the present invention is the fuel cell system according to the first invention, further including a purifier configured to purify the water supplied from the recovered water tank, wherein the purifier is disposed on the second water passage.

A fourth invention of the present invention is the fuel cell system according to the first invention, further including a purifier disposed on the first water passage so as to be located upstream of the branch portion and configured to purify the water supplied from the recovered water tank, wherein: the water supplying device is disposed downstream of the purifier; and a filter is disposed on the first water passage extending between the water supplying device and the purifier.

A fifth invention of the present invention is the fuel cell system according to the first invention, wherein the water feeding device is disposed at a position lower than a drain outlet of the recovered water tank.

A sixth invention of the present invention is the fuel cell system according to the first invention, wherein the water feeding device is disposed at a position lower than a lower limit water level of the recovered water tank.

A seventh invention of the present invention is the fuel cell system according to the first invention, wherein the water feeding device is disposed at a position lower than a bottom of the recovered water tank.

An eighth invention of the present invention is the fuel cell system according to the first invention, further including: a switching unit configured to switch a destination to which the water from the recovered water tank is supplied, between the hydrogen generator and the cooling water tank; and a control unit, wherein the control unit is configured to control the switching unit such that the water is supplied to the hydrogen generator during a fuel gas generating operation of the hydrogen generator, and to carry out a cooling water supplying operation in which the switching unit is switched to the cooling water tank and the water supplying device is caused to operate in a period from stop of the fuel gas generating operation to subsequent start of the fuel gas generating operation.

A ninth invention of the present invention is the fuel cell system according to the eighth invention, wherein the control unit is configured to stop an electric power generating operation of the fuel cell system and carry out the cooling water supplying operation when a continuous electric power generating operation time of the fuel cell system becomes a first threshold or more.

A tenth invention of the present invention is the fuel cell system according to the eighth invention, wherein the control unit is configured to stop an electric power generating operation of the fuel cell system and carry out the cooling water supplying operation when a cumulative amount of electric power generated at the time of a continuous electric power generating operation of the fuel cell system becomes a second threshold or more.

An eleventh invention of the present invention is the fuel cell system according to the eighth invention, wherein the control unit is configured to stop an electric power generating operation of the fuel cell system and carry out the cooling water supplying operation when a water level of the cooling water tank becomes a third threshold or less.

A twelfth invention of the present invention is the fuel cell system according to the eighth invention, wherein the control unit is configured to stop an electric power generating operation of the fuel cell system and carry out the cooling water supplying operation when a continuous electric power generating operation time of the fuel cell system becomes equal to or more than a fourth threshold at which a water level of the cooling water tank is presumed to become a third threshold or less by evaporation of the cooling water at the time of the operation of the fuel cell system.

A thirteenth invention of the present invention is the fuel cell system according to the eighth invention, wherein the control unit is configured to stop an electric power generating operation of the fuel cell system and carry out the cooling water supplying operation when a cumulative amount of electric power generated at the time of a continuous electric power generating operation of the fuel cell system becomes equal to or more than a fifth threshold at which a water level of the cooling water tank is presumed to become a third threshold or less by supply of the water to a water utilizing device at the time of the operation of the fuel cell system.

A fourteenth invention of the present invention is the fuel cell system according to the eighth invention, wherein the control unit is configured to stop an electric power generating operation of the fuel cell system and carry out the cooling water supplying operation when a cumulative amount of electric power generated at the time of a continuous electric power generating operation of the fuel cell system becomes equal to or more than a fifth threshold at which a water level of the cooling water tank is presumed to become a third threshold or less by evaporation of the cooling water and supply of the water to a water utilizing device at the time of the operation of the fuel cell system.

A fifteenth invention of the present invention is the fuel cell system according to the eleventh invention, further including a water level detector configured to detect the water level of the cooling water tank, wherein the control unit is configured to stop the electric power generating operation of the fuel cell system when the water level detected by the water level detector is the third threshold or less.

A sixteenth invention of the present invention is the fuel cell system according to the ninth invention, further including an operation allowing device configured not to allow an operation start of the fuel cell system until the cooling water supplying operation is completed.

A seventeenth invention of the present invention is the fuel cell system according to the ninth invention, further including a threshold setting device configured to set the time threshold, wherein the threshold setting device is configured to update the first threshold in accordance with an operating time of the cooling water supplying operation performed previously.

An eighteenth invention of the present invention is the fuel cell system according to the eighth invention, wherein the control unit is configured to cause the water feeding device to operate such that the cooling water the amount of which corresponds to a continuous electric power generating operation time of the fuel cell system or a cumulative amount of electric power generated is supplied to the cooling water tank in the cooling water supplying operation.

A nineteenth invention of the present invention is the fuel cell system according to the fourteenth invention or the fifteenth invention, further including: an overflow port included in the cooling water tank; and a water returning passage through which overflow water returns to the recovered water tank from the overflow port.

A twentieth invention of the present invention is the fuel cell system according to the first invention, further including: a switching unit configured to switch a destination to which the water from the recovered water tank is supplied, between the hydrogen generator and the cooling water tank; and a control unit, wherein the control unit is configured to control the water feeding device and the switching unit such that supply of the water to the hydrogen generator starts after the water is supplied to the cooling water tank in a start-up operation.

A twenty-first invention of the present invention is the fuel cell system according to the first invention, further including: a switching unit configured to switch a destination to which the water from the recovered water tank is supplied, between the hydrogen generator and the cooling water tank; and a control unit, wherein the control unit is configured to control the water feeding device and the switching unit such that supply of the water to the hydrogen generator for a fuel gas generating operation starts after the water is supplied to the cooling water tank in a start-up operation.
A twenty-second invention of the present invention is the fuel cell system according to the first invention, wherein: the cooling water tank is disposed above the recovered water tank; a supply port through which the water is supplied to the cooling water tank from the second water passage is formed at a position higher than an outlet port of the water in the cooling water tank; and the fuel cell system is configured to supply the water from the recovered water tank to both the reformer and the cooling water tank while the fuel cell system is operating.

In the above invention, the phrase "the electric power generating operation of the fuel cell system" denotes an operation of the fuel cell system at the time of the electric power generating operation of the fuel cell, and includes a fuel gas generating operation of the hydrogen generator and the electric power generating operation of the fuel cell.
The above object, other objects, features and advantages of the present invention will be made clear by the following detailed explanation of preferred embodiments with reference to the attached drawings.

### Effects of the Invention

In accordance with the fuel cell system of the present invention, by a configuration in which: tanks are not separately provided to separate the cooling water system and the reforming water system; and the number of pumps for supplying water to the cooling water system and the reforming water system is smaller than before, the impurities of the cooling water system are prevented from getting mixed in the reforming water, thereby preventing the reforming catalyst from deteriorating.

### Brief Description of the Drawings

[Fig. 1] Fig. 1 is a configuration diagram showing a fuel cell system according to Embodiment 1 of the present invention.
[Fig. 2] Fig. 2 is a configuration diagram showing the fuel cell system according to Embodiment 2 of the present invention.
[Fig. 3] Fig. 3 is a schematic diagram showing the configuration of a bubble separator shown in Fig. 2.
[Fig. 4] Fig. 4 is a block diagram showing the configuration of the fuel cell system according to Embodiment 4 of the present invention.
[Fig. 5] Fig. 5 is a flow chart showing contents of a water supply control program of the fuel cell system.
[Fig. 6] Fig. 6 is a flow chart showing contents of "water supply control performed when the system is operating" shown in the flow chart of Fig. 5.
[Fig. 7] Fig. 7 is a flow chart showing contents of "water supply control performed when the system is not operating" shown in the flow chart of Fig. 5.
[Fig. 8] Fig. 8 is a block diagram showing the configuration of the fuel cell system according to Embodiment 4 of the present invention.
[Fig. 9] Fig. 9 is a flow chart showing contents of the water supply control performed when the fuel cell system according to Embodiment 4 of the present invention is operating.
[Fig. 10] Fig. 10 is a flow chart showing contents of the water supply control performed when the fuel cell system according to Embodiment 5 of the present invention is not operating.
[Fig. 11] Fig. 11 is a block diagram showing the configuration of the fuel cell system according to Embodiment 6 of the present invention.
[Fig. 12] Fig. 12 is a flow chart showing contents of the water supply control performed when the fuel cell system according to Embodiment 6 of the present invention is operating.
[Fig. 13] Fig. 13 is a flow chart showing contents of the water supply control in the fuel cell system according to Embodiment 7 of the present invention.
[Fig. 14] Fig. 14 is a flow chart showing contents of the water supply control performed when the fuel cell system according to Embodiment 8 of the present invention is operating.
[Fig. 15] Fig. 15 is a configuration diagram showing the fuel cell system of the conventional art.

### Explanation of Reference Numbers

- 1, 30: fuel cell
- 2, 31: hydrogen generator
- 3, 32: oxidizing gas supplier
- 4, 33: cooling water passage
- 4A: cooling water outward route
- 4B: cooling water return route
- 5, 34: cooling water tank
- 6, 35: second pump
- 7, 36: recovered water tank
- 8, 41: first water passage
- 9, 42: first pump
- 10, 38: purifier
- 11, 37: second water passage
- 12: orifice A
- 13: orifice B
- 14: water returning passage
- 15: control unit
- 16: burner
- 17, 43: material supplying passage
- 18, 44: fuel gas supplying passage
- 19, 45: oxidizing gas supplying passage
- 20: anode off gas passage
- 21: recovered water passage
- 22: cathode off gas passage
- 23: water supplying valve
- 24: water level detector
- 25: bubble separator
- 26: entrance A
- 27: exit B
- 28: exit C
- 29: dividing wall
- 39: water supplying pump
- 40: water returning passage
- 46: dividing wall
- 47: first water storage portion
- 48: second water storage portion
- 49: first water level detector
- 50: second water level detector
- 60, 62: water condenser
- 61: heat exchanger
- 71: reformer
- 72: memory device
- 73: threshold setting device
- 74: operation allowing device
- 75: reforming water valve
- 76: cooling water valve
- 81: filter
- 82: humidifying device
- 83: third pump
- 84: humidifying water supplying passage

### Best Mode for Carrying Out the Invention

Hereinafter, preferred embodiments of the present invention will be explained in reference to the drawings. In the drawings, same reference numbers are used for the same or corresponding components, and a repetition of the same explanation is avoided.

### Embodiment 1

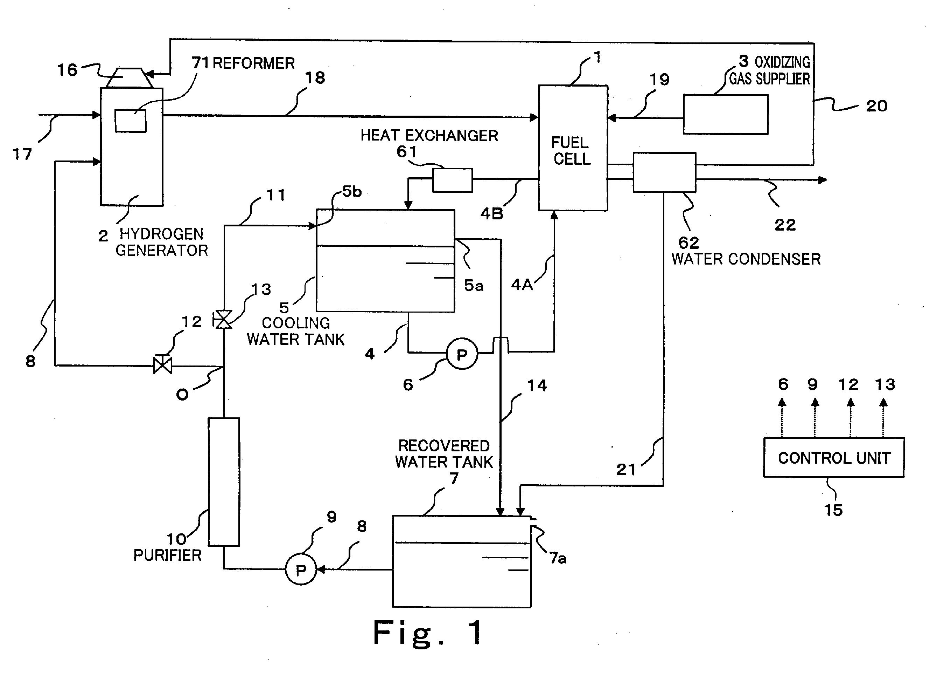

Fig. 1 is a configuration diagram of a fuel cell system according to Embodiment 1 of the present invention.
As shown in Fig. 1, the fuel cell system of Embodiment 1 includes: a fuel cell 1 configured to generate electric power using a hydrogen-containing fuel gas and an oxidizing gas; a hydrogen generator 2 incorporating a reformer 71 configured to carry out steam reforming of a raw material, such as a city gas, to generate a hydrogen-rich fuel gas; a material supplying passage 17 through which a material gas, such as a city gas, is supplied to the reformer; a fuel gas supplying passage 18 through which the hydrogen-rich fuel gas is supplied from the hydrogen generator 2 to the fuel cell 1; and an oxidizing gas supplier 3 which supplies the oxidizing gas through an oxidizing gas supplying passage 19 to the fuel cell 1.

In addition to the reformer 71, the hydrogen generator 2 further incorporates: a shift converter (not shown) configured to reduce, by a shift reaction, carbon monoxide in the fuel gas generated in the reformer 71; and a CO remover (not shown) configured to reduce, by an oxidation reaction, the carbon monoxide in the fuel gas having flowed through the shift converter. The reformer 71 includes a reforming catalyst (not shown) to accelerate a steam-reforming reaction, and further includes a burner 16 as heat supplying means for supplying reaction heat to the reforming catalyst.

Herein, the oxidizing gas supplier 3 includes a blower (not shown) whose inlet port is open to the atmosphere, and further includes a humidifier (not shown) which humidifies the air sucked by the blower by using a certain amount of steam. A fan, such as a sirocco fan, may be used as the oxidizing gas supplier 3.

Moreover, the fuel cell system of the present embodiment further includes: a cooling water passage 4 through which cooling water for cooling down the fuel cell 1 flows; a cooling water tank 5 which stores the cooling water; and a second pump 6 which supplies the water from the cooling water tank 5 through the cooling water passage 4 to the fuel cell 1.

The cooling water passage 4 is constituted by a cooling water outward route 4A and a cooling water return route 4B. An upstream end of the cooling water outward route 4A is connected to the cooling water tank 5, and a downstream end thereof is connected to the fuel cell 1. An upstream end of the cooling water return route 4B is connected to the fuel cell 1, and a downstream end thereof is connected to the cooling water tank 5. A heat exchanger 61 is disposed on a portion of the cooling water return route 4B. With this, the heat generated in the fuel cell 1 can be recovered by an external heat medium (water for example), so that the fuel cell 1 can be maintained at an appropriate temperature.

Moreover, the fuel cell system of the present embodiment further includes: a recovered water tank 7 configured to store the water which is supplied through a recovered water passage 21 and recovered by a water condenser 62 from reactant gases (the fuel gas and the oxidizing gas) discharged from the fuel cell 1; a first water passage 8 configured to connect the recovered water tank 7 and the hydrogen generator 2; and a first pump 9 configured to feed the water from the recovered water tank 7 to the first water passage 8. To use as a fuel of the burner an unused fuel gas in the fuel gas discharged from the fuel cell 1, the fuel cell 1 and the burner 16 are connected to each other by an anode off gas passage 20. The oxidizing gas discharged from the fuel cell 1 flows through a cathode off gas passage 22 to the outside of the system. In the present embodiment, the water condenser 62 is disposed on both the anode off gas passage 20 and the cathode off gas passage 22 to recover the water from both the fuel gas and the oxidizing gas. However, the water condenser 62 may be configured to recover the water from the fuel gas or the oxidizing gas.

Moreover, a purifier 10 configured to purify the water flowing through the first water passage 8 is disposed downstream of the first pump 9 in a water flowing direction. A second water passage 11 is provided, which branches from the first water passage 8 located downstream of the purifier 10 in the water flowing direction and is connected to the cooling water tank 5. An orifice A12 which is one example of a second flow rate adjuster and adjusts the flow rate of the reforming water is disposed on the first water passage 8 located downstream of a branch point O in the water flowing direction. The branch point O is a portion where the second water passage 11 branches from the first water passage 8. An orifice B13 which is one example of a first flow rate adjuster of the present invention and adjusts the amount of water supplied is disposed on the second water passage 11. Moreover, a water returning passage 14 is formed, through which overflow water overflowing from the cooling water tank 5 returns to the recovered water tank 7 disposed under the cooling water tank 5. The cooling water tank 5 is open to the atmosphere. The cooling water tank 5 may be directly open to the atmosphere, or for example, the cooling water tank 5 may be open to the atmosphere via the water returning passage 14 and the recovered water tank 7 which is open to the atmosphere. Moreover, herein, the purifier 10 is disposed on a portion of the first water passage 8 which portion is located downstream of the first pump 9 in the water flowing direction. However, the purifier 10 may be disposed upstream of the first pump 9 in the water flowing direction. Moreover, it is preferable that the first pump 9 be disposed at a position lower than the position of a drain outlet 7a of the recovered water tank 7. Generally, since pressure on an entrance side of a pump becomes a negative pressure when the pump starts operating, a gas dissolved in the water comes out, and the air tends to be ingested in the pump. However, in accordance with the above configuration, since the position of the first pump 9 is lower than the water level of the recovered water tank, water pressure is applied to the first pump. Therefore, the pressure on the entrance side of the first pump 9 is unlikely to be the negative pressure when the first pump 9 starts operating, so that the air ingestion can be suppressed. In view of this, to improve an effect of suppressing the air ingestion by causing the water pressure to be applied to the first pump 9 regardless of changes in the water level of the recovered water tank 7, it is more preferable that the first pump 9 be disposed at a position lower than a lower limit water level of the recovered water tank 7, and it is further preferable that the first pump 9 be disposed at a position lower than a bottom of the recovered water tank 7.
Moreover, the second water passage 11 is connected to a supply port 5b formed on a side wall of the cooling water tank 5, and the water returning passage 14 is connected to an overflow port (outlet port) 5a formed on the side wall of the cooling water tank 5. Moreover, the overflow port 5a is formed at a position lower than the supply port 5b in order to reduce the possibility that the water pressure is applied through the second water passage 11 to the branch point O, and the cooling water in the cooling water tank 5 flows backward from the supply port 5b to the second water passage 11 and gets mixed in the reforming water. Instead of the above overflow structure, the structure of discharging the cooling water in the cooling water tank 5 may be configured such that: a normal drain outlet is formed on the side wall of the cooling water tank 5; an upstream end of the water returning passage 14 is connected to the drain outlet; and an on-off valve is disposed on the water returning passage 14. With this, by opening the on-off valve, the water may be discharged through the water returning passage 14.

Further, the fuel cell system of the present embodiment includes a control unit 15 configured to control the second pump 6, the first pump 9, the orifice A12, and the orifice B13. In the present embodiment, the control unit 15 controls the operations of the entire fuel cell system. Note that the control unit 15 denotes not only a single control unit but also a group of a plurality of control units configured to control the fuel cell system in cooperation with one another. Therefore, the control unit 15 does not have to be constituted by a single control unit but may be constituted such that a plurality of control units are dispersively arranged to control the fuel cell system in cooperation with one another. For example, the control unit 15 may be configured to control only the second pump 6, the first pump 9, the orifice A12, and the orifice B13, and a control unit which controls the operations of the fuel cell system in cooperation with the control unit 15 may be separately provided.

Next, the operations of the fuel cell system in Embodiment 1 will be explained. The operations of the fuel cell system are carried out by the control of the control unit 15.

First, the fuel cell system carries out a start-up operation by a start-up command output from the control unit 15. Specifically, the start-up operation including an operation of increasing the temperature of the hydrogen generator 2 is executed to adequately reduce the carbon monoxide contained in the hydrogen-containing fuel gas generated in the hydrogen generator 2 such that the hydrogen-containing fuel gas can be supplied to the fuel cell 1. Then, when the hydrogen generator 2 starts generating the high-quality fuel gas which has been reduced in a carbon monoxide concentration by the start-up operation, it starts supplying the fuel gas to the fuel cell 1. Thus, the fuel cell 1 starts an electric power generating operation.
Specifically, the hydrogen-rich fuel gas is generated by the steam-reforming reaction between the raw material, such as the city gas, which is supplied through the material supplying passage 17 and contains the organic compound formed by at least carbon and hydrogen, and the steam which is generated in the reformer from the water supplied through the first water passage 8. The fuel gas flows through the shift converter and the CO remover to generate the high-quality fuel gas whose carbon monoxide concentration is about 10 ppm or less. At this time, although the fuel gas contains a certain amount of steam subjected to the reforming reaction, the fuel gas may be humidified to further contain a certain amount of steam.

The fuel gas generated in the hydrogen generator 2 is supplied through the fuel gas supplying passage 18 to an anode (not shown) of the fuel cell 1.

Moreover, the humidified oxidizing gas is supplied from the oxidizing gas supplier 3 through the oxidizing gas supplying passage 19 to a cathode (not shown) of the fuel cell 1.

The fuel cell 1 generates electric power, heat, and water by an electrochemical reaction between the hydrogen-rich fuel gas supplied from the hydrogen generator 2 and the oxidizing gas supplied from the oxidizing gas supplier 3.

At this time, the steam contained in the unreacted hydrogen-containing fuel gas (hereinafter referred to as "anode off gas") having been unconsumed in the fuel cell 1 is separated from the anode off gas and condensed to water by the water condenser 62. The anode off gas from which the steam is removed is supplied through the anode off gas passage 20 to the burner 16. The burner 16 mixes and burns the anode off gas and the air supplied from an air supplier (not shown) to supply heat to the hydrogen generator 2. Meanwhile, the water having been separated from the anode off gas flows through the recovered water passage 21 to be stored in the recovered water tank 7.

Similarly, the unreacted oxidizing gas (hereinafter referred to as "cathode off gas") having been unconsumed in the fuel cell 1 is also separated into the gas and the water by the water condenser 62. The separated cathode off gas is discharged through the cathode off gas passage 22 to the outside of the system, and the water flows through the recovered water passage 21 to be stored in the recovered water tank 7.

Moreover, the fuel cell 1 is connected to the cooling water tank 5 by the cooling water passage 4. By the operation of the second pump 6, the cooling water is supplied to the fuel cell 1, and the exhaust heat generated at the time of the electric power generating operation of the fuel cell 1 is recovered by the cooling water.

Then, when the control unit 15 outputs a control signal of a stop command, the fuel cell system starts a stop operation. When the stop operation is completed, the fuel cell system stops.

Next, a method for supplying the reforming water and a method for supplying the water to the cooling water tank 5 at the time of the electric power generating operation of the fuel cell system of Embodiment 1 of the present invention will be explained.

The water supplied by the operation of the first pump 9 from the recovered water tank 7 through the first water passage 8 to the hydrogen generator 2 is heated by a water evaporator (not shown) which is increased in temperature by the heat of the burner 16 disposed in the hydrogen generator 2. Thus, the water evaporator generates the steam necessary for the steam-reforming reaction performed in the reformer. The purifier 10 including an ion-exchange resin is disposed on the first water passage 8 to remove impurities, such as electrically-conductive ions. Moreover, based on a ratio between a pressure loss determined by the diameter and length of the orifice A12 disposed on the first water passage 8 and a pressure loss determined by the diameter and length of the orifice B13 disposed on the second water passage 11, the water supplied from the recovered water tank 7 by the first pump 9 is divided into the reforming water supplied to the hydrogen generator 2 and the water supplied to the cooling water tank 5 at a predetermined flow ratio. Thus, the reforming water is supplied to the hydrogen generator 2 and the water is supplied to the cooling water tank 5 by a single pump (first pump 9).

Moreover, as described above, since the supply port 5b is formed at a position higher than the position of the overflow port 5a, it is possible to reduce the possibility that the water pressure is applied through the second water passage 11 to the branch point O, and the cooling water in the cooling water tank 5 flows backward through the second water passage 11 and gets mixed in the reforming water. With this, the impurities of the cooling water system which causes deterioration of the reforming catalyst can be prevented from getting mixed in the reforming water by a simple configuration which does not require a tank for storing the water used as the reforming water.

Next, a method for controlling the flow rate of the reforming water and the amount of water supplied to the cooling water tank 5 in the fuel cell system of the present embodiment will be explained.

In the hydrogen generator 2, a ratio S/C between the number of moles of water molecules in the steam supplied to the reformer and the number of moles of carbon atoms contained in the raw material supplied to the reformer needs to be stably maintained to a predetermined value (for example, S/C = 3). If the S/C is smaller than a desired value, the risk that carbon is deposited on the reforming catalyst to deteriorate the catalyst increases. In contrast, if the S/C is larger than the desired value, the amount of heat for generating the steam increases. Therefore, the efficiency deteriorates.

Moreover, if the amount of steam supplied to the reformer frequently changes, the amount of steam in the fuel gas generated changes, and this also changes the dew point of the fuel gas. As a result, in a case where the fuel cell 1 is a polymer electrolyte fuel cell, and a solid polymer membrane becomes too dry by the change in the dew point of the fuel gas, the ion conductivity may not be adequately exercised, and this may lower the electric power. In contrast, in a case where the solid polymer membrane becomes too wet, the diffusion of the gas may be disturbed, this may cause problems, such as flooding, and the fuel cell system may stop. As is clear from the above, controlling the flow rate of the reforming water is an important factor for maintaining and improving the performance, reliability, and durability of the fuel cell system.

Therefore, to supply the reforming water at an accurate flow rate such that the S/C becomes a predetermined optimal value, the water needs to be precisely divided into the reforming water and the water supplied to the cooling water tank 5. On this account, open degrees of the orifice A12 and the orifice B13 are controlled by the control unit 15 such that a water dividing ratio becomes a desired value (for example, the amount of reforming water: the amount of water supplied to the cooling water tank 5 = 2 : 1).
Moreover, to increase the amount of electric power generated in the fuel cell 1, the amount of the fuel gas generated in the hydrogen generator 2 needs to be increased. In this case, the pressure loss of the hydrogen generator 2 also increases. As a result, the water dividing ratio between the amount of reforming water and the amount of water supplied to the cooling water tank 5 changes as compared to a case where the amount of electric power generated is small, and the amount of water supplied to the cooling water tank 5 becomes larger than the amount of reforming water supplied to the hydrogen generator 2 (for example, the amount of reforming water : the amount of water supplied to the cooling water tank 5 = 1 : 2).

To be specific, to increase the amount of electric power generated, the amount of the material gas supplied and the amount of the water supplied need to be increased while maintaining the S/C to the predetermined optimal value. However, since the pressure loss inside the hydrogen generator 21 increases as the amount of electric power generated increases, there is the possibility that the S/C becomes much smaller than the above predetermined value. Here, data regarding changes of the water dividing ratio between the first water passage and the second water passage in association with the increase in the amount of electric power generated is measured in advance, and this change data is stored in a memory device (not shown in Fig. 1). Based on this change data, the control unit 15 adjusts the open degree of at least one of the orifice A12 and the orifice B13, and the first pump 9 such that the S/C becomes the predetermined value. Thus, the amount of water supplied to the reformer is increased. For example, based on data indicating that the water dividing ratio corresponding to the increased amount of electric power generated in the fuel cell 1 changes from the amount of reforming water : the amount of water supplied to the cooling water tank = 2 : 1 to the amount of reforming water: the amount of water supplied to the cooling water tank = 1 : 2, the orifice B13 is controlled such that the pressure loss of the second water passage becomes four times as large as the original. Also, the first pump is operated to correspond to the increased amount of electric power generated, so that the amount of water supplied to the reformer is increased.

In a case where the amount of water supplied is increased to increase the amount of electric power generated, the amount of water supplied to the cooling water tank 5 increases as the amount of electric power generated increases. Thus, the water level in the cooling water tank 5 goes up. To keep the water level inside the cooling water tank 5 constant, the overflow water is supplied through the water returning passage 14 to the recovered water tank 7. As a result, in a case where the amount of water supplied to the cooling water tank 5 increases, the water circulates through the first water passage 8, the second water passage 11, and the water returning passage 14.

As above, in a case where the first pump 9 is operated in the fuel cell system of the present embodiment, the reforming water having flowed through the purifier 10 disposed on the first water passage 8 is divided by a pressure loss ratio between the orifice A12 and the orifice B13 to be supplied to the hydrogen generator 2 and the cooling water tank 5. Therefore, the impurities of the cooling water system can be prevented from getting mixed in the reforming water by the simple configuration which does not require the tank for storing the water used as the reforming water. Thus, the reforming catalyst can be prevented from deteriorating.

Moreover, the control unit 15 controls the open degrees of the orifice A12 and the orifice B13 and controls the first pump 9. With this, the flow rate of the reforming water can be controlled such that the S/C becomes the predetermined value, and the amount of water supplied to the cooling water tank 5 can also be controlled. Therefore, the flow rate of the reforming water and the amount of water supplied to the cooling water tank 5 can be controlled by a simpler configuration which is smaller in the number of pumps than that of the conventional configuration. In the present embodiment, the orifice is disposed on each of the first water passage 8 and the second water passage 11. However, even if the orifice is disposed on only one of the water passages, the flow rate of the reforming water and the amount of water supplied to the cooling water tank 5 can be controlled in the same manner as above by a combination of the operation of one orifice and the operation of the first pump 9.

Moreover, in accordance with the fuel cell system of the embodiments of the present invention, the water fed by the first pump 9 is divided into the reforming water supplied to the hydrogen generator 2 and the water supplied to the cooling water tank 5. With this, the water the amount of which is smaller than a minimum output amount of the first pump 9 can be supplied to the hydrogen generator 2 as the reforming water.

Moreover, the overflow port 5a is formed in the cooling water tank 5. With this, the water level in the tank can be kept constant, and the water having overflowed can be reutilized. Moreover, the water in the cooling water tank 5 and the cooling water passage can be purified by causing the water to overflow.

In the above embodiment, the pressure loss ratio is determined by disposing the orifice A12 and the orifice B13. However, by disposing only the orifice B13 without disposing the orifice A12, and adjusting the open degree of the orifice B13 and the operation of the first pump 9, the amount of water flowing through the passage extending from the branch point O to the hydrogen generator 2 and the amount of water flowing through the passage extending from the branch point O to the cooling water tank 5 may be adjusted. Moreover, instead of the above orifice, a three-way valve may be disposed on the branch point O to adjust the open degrees to both passages, thereby adjusting the flow rate of the water. However, the orifice is preferable to the three-way valve since the orifice is easier to control, and can further suppress the change in the flow rate of the water.

### Embodiment 2

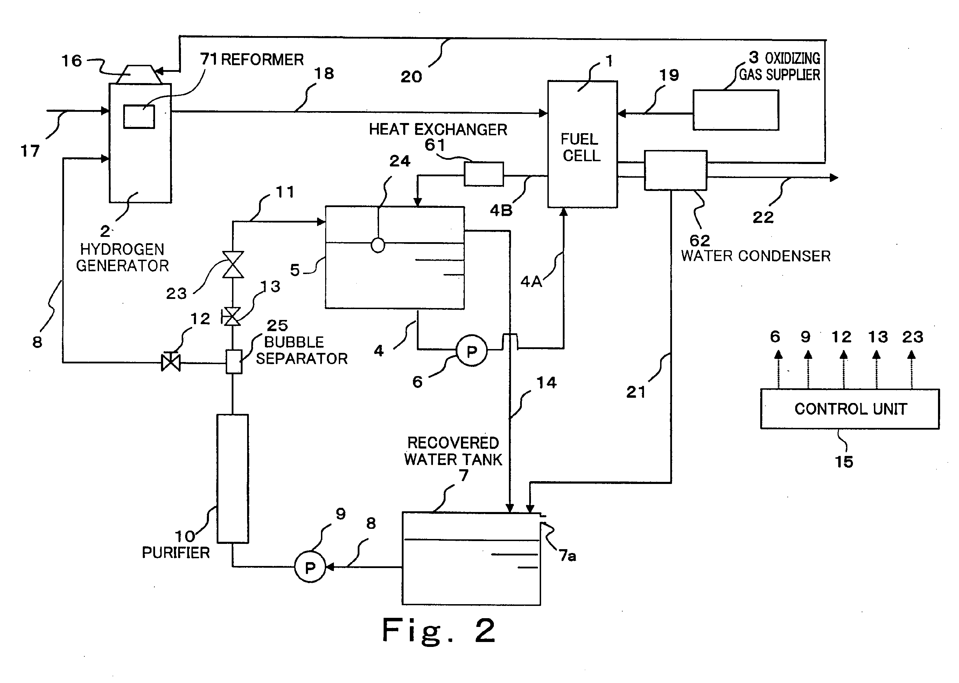

Fig. 2 is a configuration diagram showing the fuel cell system according to Embodiment 2 of the present invention. The fuel cell system of Embodiment 2 is the same in basic configuration as that of Embodiment 1, but is different from that of Embodiment 1 regarding a component disposed on the second water passage 11 and the configuration of the cooling water tank 5. Therefore, these differences therebetween will be mainly explained, and explanations of the configurations and operations common to those of Embodiment 1 are omitted.

As shown in Fig. 2, the fuel cell system according to Embodiment 2 of the present invention includes: a water supplying valve 23 disposed on the second water passage 11 to block the water supply to the cooling water tank 5; a water level detector 24 configured to detect the water level of the cooling water tank 5; and a bubble separator 25 disposed on a connection portion of the first water passage 8 and the second water passage 11 to separate the water and the bubbles. In the present embodiment, used as the water level detector 24 is a float type level switch, and the water level is detected by electromagnetic ON and OFF signals. In a case where the water level detector 24 detects the water level equal to or higher than a predetermined water level, it detects the ON signal.

Next, a method for supplying the reforming water and a method for supplying the water to the cooling water tank 5 in the fuel cell system according to Embodiment 2 of the present invention will be explained.

As explained in Embodiment 1 of the present invention, the control unit 15 controls such that: the water is excessively supplied to the cooling water tank 5 by the increase in the amount of electric power generated in the fuel cell 1; the water excessively supplied returns to the recovered water tank 7 through the water returning passage 14; and the water circulates through the first water passage 8, the second water passage 11, and the water returning passage 14.

Here, in the present embodiment, in addition to the above control of Embodiment 1, the control unit 15 further controls the water supplying valve 23 based on a detection signal of the water level detector 24. With this, the water the amount of which is required by the cooling water tank 5 can be supplied to the cooling water tank 5, and the S/C can be prevented from being significantly different from the predetermined optimal value when controlling the water supplying valve 23 based on the detection signal of the water level detector 24.

In a case where the control unit 15 detects that the detection signal output from the water level detector 24 is the OFF signal (indicating that the water level has gone down), it controls such that: the water supplying valve 23 becomes an open state; and the operation of the first pump 9 is increased to prevent the S/C from significantly falling below the predetermined value. With this, the divided water continues to be supplied through the second water passage 11 to the cooling water tank 5.

In contrast, in a case where the control unit 15 detects that the detection signal output from the water level detector 24 is the ON signal (indicating that the water level has gone up), it controls such that: the water supplying valve 23 becomes a closed state; and the operation of the first pump 9 is decreased as compared to a case where the water supplying valve 23 is the open state, to prevent the S/C from significantly exceeding the predetermined value.

As above, since the water the amount of which is required by the cooling water tank 5 can be supplied to the cooling water tank 5 while stably maintaining the S/C to the predetermined value, the amount of work of the first pump 9 can be reduced.

The present embodiment is configured such that the water supplying valve 23 is disposed on the second water passage 11, and the water supplying valve 23 is controlled based on the signal output from the water level detector 24. However, the orifice B13 may be provided instead of the water supplying valve 23, and the open degree of the orifice B13 may be controlled based on the signal of the water level detector 24.

Next, the bubble separator 25 disposed on the connection portion of the first water passage 8 and the second water passage 11 will be explained.

Bubbles are generated in the water passage since the system repeatedly starts up and stops, and the water temperature in the water passage increases and decreases by changes in the outside air temperature, and the like. Moreover, in the case of starting the operation of the system by supplying the water to all the water passages in a state in which there is no water in the system, it is extremely difficult to remove all the bubbles from a large number of components, such as pumps and solenoid valves, and the water passages complexly extending upward and downward in the system, so that some bubbles remain in the passages. If these bubbles are supplied to the reformer together with the reforming water, the change in the amount of steam occurs. Therefore, there is the possibility that the amount of fuel gas generated and the dew point of the fuel gas change, and the electric power generation of the fuel cell 1 becomes unstable.

Here, the bubble separator 25 of the present embodiment is disposed to prevent the bubbles contained in the water fed by the first pump 9 from being supplied to the reformer in the hydrogen generator 2. The bubble separator 25 is configured to separate the bubbles from the water and cause the separated bubbles to flow through the second water passage 11 to the cooling water tank 5.

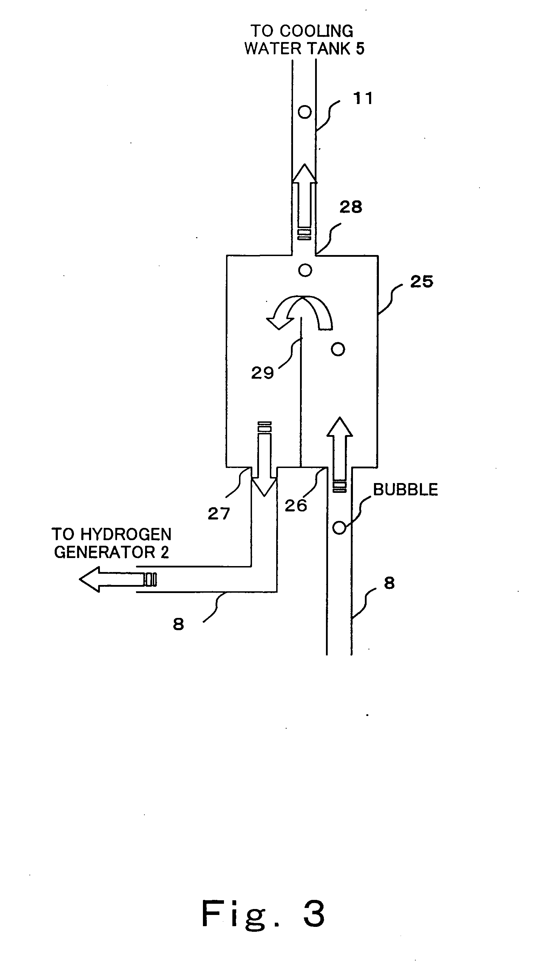

Fig. 3 is a configuration diagram showing one example of the bubble separator 25 according to Embodiment 2 of the present invention.

The bubble separator 25 includes: an entrance A26 which is formed at a lower portion thereof and through which the water is fed by the first pump 9; an exit B27 which is also formed at the lower portion and through which the water is supplied to the reformer; an exit C28 which is formed at an upper portion thereof and is connected to the second water passage 11; and a dividing wall 29 disposed therein.

The reforming water supplied through the entrance A26 is pressed by a discharge pressure of the first pump 9 to flow upward once, then flows over the dividing wall 29 to flow downward, and is supplied through the exit B27 to the hydrogen generator 2. At this time, the bubbles supplied together with the water through the entrance A26 is separated from the water by its buoyant force to flow toward the upper portion of the bubble separator 25, and flow out from the exit C28 through the second water passage 11 to the cooling water tank 5.

As above, since the bubbles and the water are separated from each other in the bubble separator 25, and the bubbles flow through the second water passage 11 to the cooling water tank 5, the bubbles can be prevented from being supplied to the reformer in the hydrogen generator 2. Thus, the hydrogen generator 2 and the fuel cell 1 can continue to stably operate, and the reliability of the fuel cell system improves.

### Embodiment 3

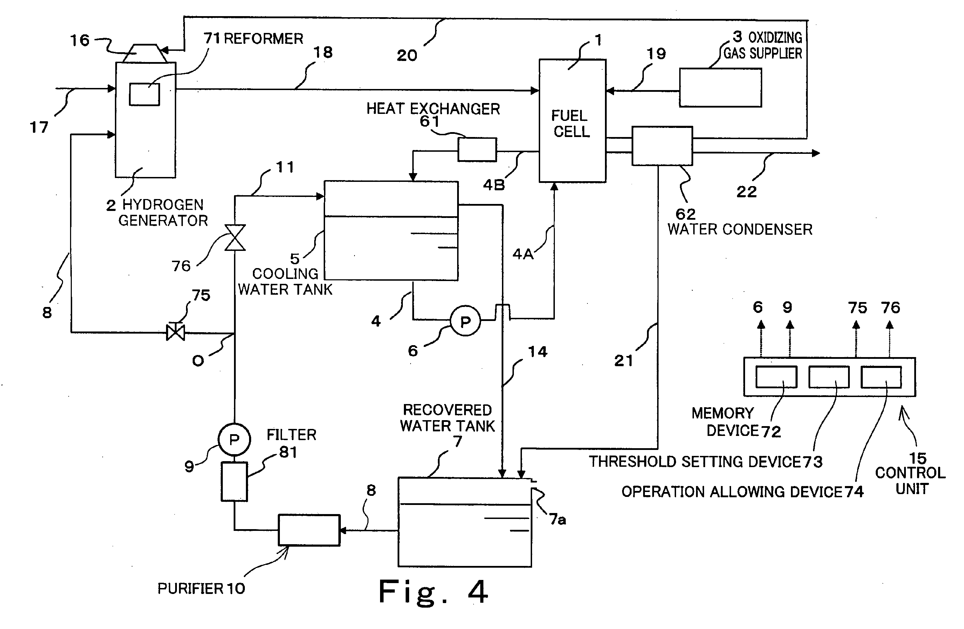

Fig. 4 is a block diagram showing the configuration of the fuel cell system according to Embodiment 4 of the present invention. As shown in Fig. 4, the fuel cell system of Embodiment 3 is the same in basic configuration as that of Embodiment 1, but the following points are mainly different therebetween. Hereinafter, the different configurations and operations will be mainly explained, and explanations of the configurations and operations common to those of Embodiment 1 are omitted.

Instead of the orifice A12 and the orifice B13 in Embodiment 1, the fuel cell system of Embodiment 3 includes a reforming water valve 75 and a cooling water valve 76. Each of the reforming water valve 75 and the cooling water valve 76 is constituted by an on-off valve, and operations thereof are controlled by the control unit 15. In a case where the reforming water valve 75 opens and the cooling water valve 76 closes, the water is supplied from the recovered water tank 7 to the reformer 71 of the hydrogen generator 2. In a case where the reforming water valve 75 closes and the cooling water valve 76 opens, the water is supplied from the recovered water tank 7 to the cooling water tank 5. Therefore, the reforming water valve 75 and the cooling water valve 76 constitutes a switching unit which switches a destination to which the water is supplied from the recovered water tank 7, between the reformer 71 of the hydrogen generator 2 and the cooling water tank 5.

Moreover, the control unit 15 includes a memory device 72, a threshold setting device 73, and an operation allowing device 74. The control unit 15 is constituted by, for example, a microcomputer, and the memory device 72 is constituted by, for example, an internal memory of the microcomputer. The threshold setting device 73 and the operation allowing device 74 in the control unit 15 are functional blocks realized by causing a calculating portion (which is not shown, and is constituted by, for example, a CPU of a microcomputer) of the control unit 15 to read out and execute a predetermined program stored in the memory device 72.

Then, the first pump 9 is disposed on the first water passage 8 so as to be located upstream of the branch point O where the first water passage 8 and the second water passage 11 branch, and the purifier 10 is disposed on the first water passage 8 so as to be located upstream of the first pump 9. Further, a filter 81 is disposed on the first water passage 8 extending between the first pump 9 and the purifier 10. The purifier 10 is filled with the ion-exchange resin. The filter 81 is configured to contain, for example, activated carbon. The purifier 10 removes the ions in the water supplied from the recovered water tank 7 to lower the electrical conductivity of the water. Moreover, the filter 81 can reduce the possibility that if the ion-exchange resin flows out from the purifier 10, the ion-exchange resin flows into the first pump 9 and is ingested in the first pump 9, and this stops the operation.

Next, the operations of the fuel cell system of Embodiment 3 configured as above will be explained. The fuel cell system has four operating modes that are: an electric power generating operation (hereinafter, the phrase "at the time of an electric power generating operation of the system" may be used) of generating electric power; a start-up operation (hereinafter, the phrase "at the time of a start-up of the system" may be used) of causing the fuel cell system to smoothly start up from a stop state (stand-by state) to the electric power generating operation; a stop operation of causing the fuel cell system to stop from the electric power generating operation; and the stand-by state (hereinafter, the phrase "at the time of a stand-by of the system" may be used). In the stop operation, the operation allowing device 74 in the control unit 15 does not allow the start-up of the fuel cell system even if a start-up request is detected, and the fuel cell system becomes a start-up not-allowing state, i.e., a state in which the control unit 15 does not output the start-up command. The stand-by state is a state in which when the start-up request is detected after the stop operation of the fuel cell system is completed, the start-up is allowed, and the start-up operation can be quickly started. Examples of the start-up request are: a case where an electric power demand of an electric power load which receives electric power supply from the fuel cell system becomes a predetermined threshold or more; and an operation start request input by a user using an operating device, not shown.

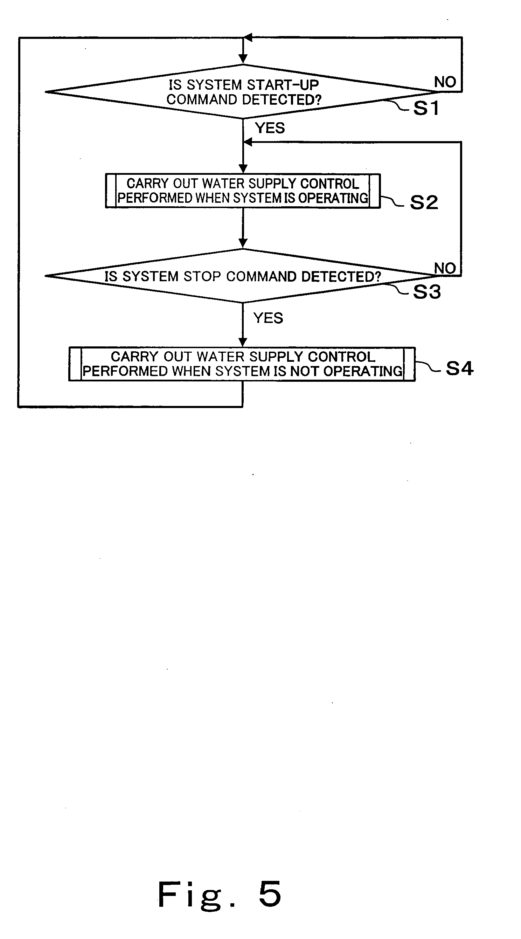

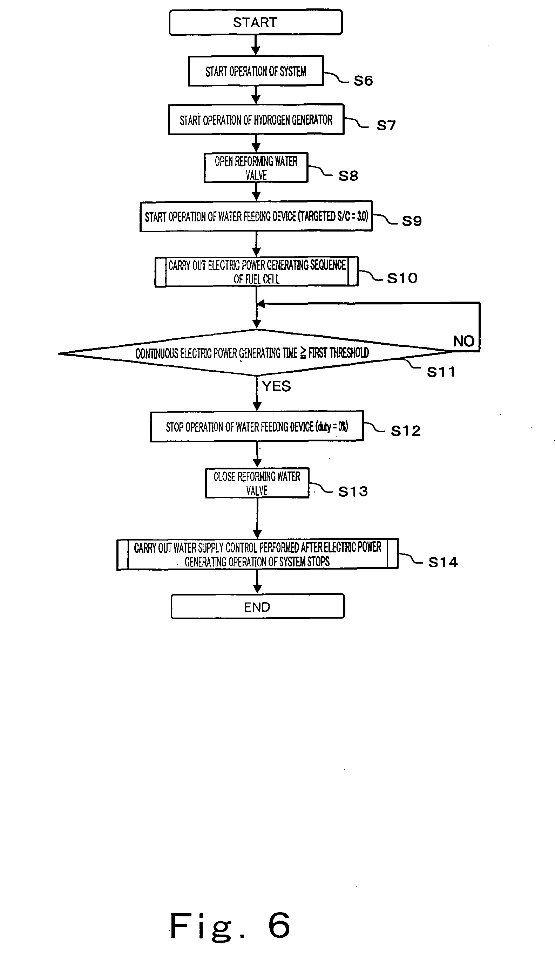

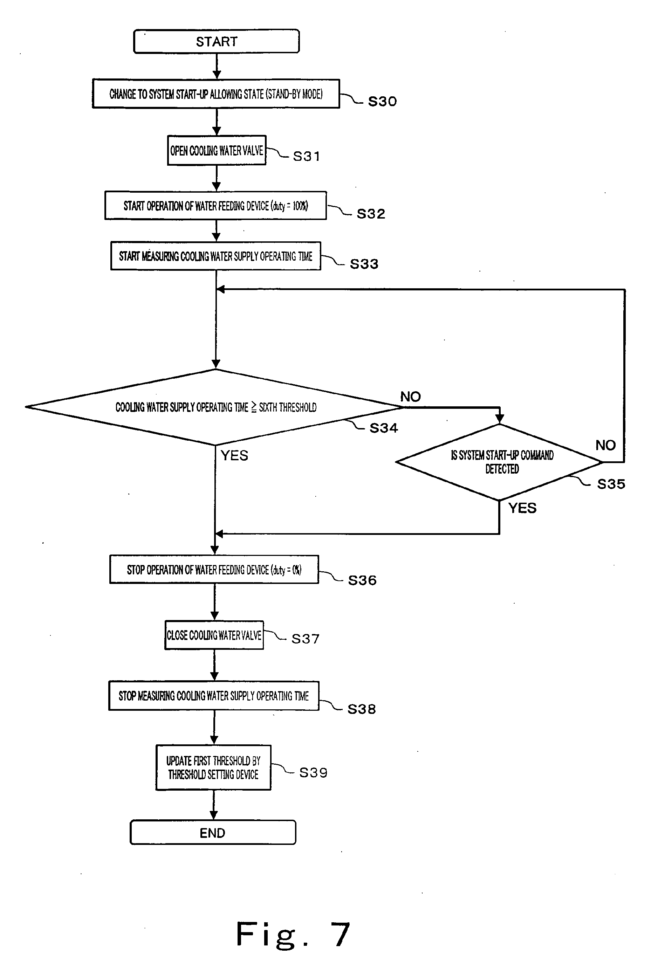

Fig. 5 is a flow chart showing contents of a water (reforming water and cooling water) supply control program of the fuel cell system. Fig. 6 is a flow chart showing contents of water supply control performed when the system is operating (at the time of the start-up operation of the system and at the time of the electric power generating operation). Fig. 7 is a flow chart showing contents of the water supply control performed after the electric power generating operation of the system stops.

The memory device 72 of the control unit 15 stores the water supply control program of Fig. 5. The calculating portion (not shown) reads out and executes the water supply control program to carry out the water supply control.

As shown in Fig. 5, in the water supply control, first, the control unit 15 stands by for the start-up command (specifically, an operation start control signal output from the control unit 15) (Step S1). When the start-up command is detected, the control unit 15 carries out the water supply control performed when the system is operating (Step S2). Next, the control unit 15 determines whether or not a system stop command (specifically, an operating stop control signal output from the control unit 15) is detected (Step S3). When the system stop command is not detected (NO in Step S3), the control unit 15 repeats the water supply control performed when the system is operating. In contrast, when the system stop command is detected (YES in Step S), the control unit 15 carries out the water supply control performed after the electric power generating operation of the system stops (Step S4), and then returns to

### Step S1.

Next, the water supply control (Step S2) performed when the system is operating will be explained.

As shown in Fig. 6, in the water supply control performed when the system is operating, the control unit 15 first starts the operation of the fuel cell system (Step S6).

Next, the control unit 15 starts the operation of the hydrogen generator 2 (Step S7).

Next, the control unit 15 opens the reforming water valve 75 (Step S8). As will be described later, since the cooling water valve 76 is closed when the water supply control performed after the electric power generating operation of the system stops is completed, the cooling water valve 76 is being closed at this point in time.

Next, the control unit 15 starts the operation of the first pump 9 that is a water feeding device (Step S9). With this, the recovered water in the recovered water tank 7 is supplied to the reformer 71 of the hydrogen generator 2 as the reforming water. As described in Embodiment 1, the first pump 9 is controlled such that the S/C in the reformer 71 of the hydrogen generator 2 becomes 3.0.

Next, when the hydrogen generator 2 starts generating the high-quality fuel gas whose carbon monoxide concentration is low, the control unit 15 shifts to an electric power generating sequence of the fuel cell 1 (Step S10). With this, the fuel cell system carries out the electric power generating operation.

Next, the control unit 15 determines whether or not a continuous electric power generating time (continuous electric power generating operation time of the fuel cell system) is a first threshold or more (Step S11). The continuous electric power generating time is measured by timer means (not shown), such as a watch, incorporated in the control unit 15, and is stored in the memory device 72. Here, the continuous electric power generating time denotes a time during which the fuel cell system continues to generate the electric power. When the fuel cell system stops generating the electric power, the continuous electric power generating time is reset to zero. The first threshold is set by the threshold setting device 73. An initial value of the first threshold is predetermined based on the water level of the cooling water tank 5 which level lowers as the cooling water in the cooling water tank 5 decreases at the time of the continuous electric power generation of the fuel cell system. The initial value of the first threshold is set in the threshold setting device 73. Then, as will be described later, the initial value of the first threshold is updated in accordance with the amount of cooling water supplied at the time of an operation of supplying the cooling water to the cooling water tank 5 after an operation stop command of the fuel cell system is detected (Step S39). The initial value of the first threshold is suitably determined by an experiment, a simulation, or the like. For example, the initial value of the first threshold is set such that it is possible to detect that the water level of the cooling water tank 5 is approaching to the lower limit water level as the cooling water decreases at the time of the continuous electric power generation. Specifically, the initial value of the first threshold is set to a continuous operating time at which the water level of the cooling water tank 5 is presumed to become a predetermined water level equal to or higher than the lower limit water level due to the decrease in the cooling water at the time of the continuous electric power generation. Note that the lower limit water level is defined as a water level at which the cooling water in the cooling water tank 5 can be circulated to recover the exhaust heat of the fuel cell 1.
In the fuel cell system of Embodiment 3, the cooling water tank 5 is open to the atmosphere via the water returning passage 14 and the recovered water tank 7. Therefore, the amount of cooling water in the cooling water tank 5 decreases by evaporation at the time of the operation. Here, the initial value of the first threshold is set to, for example, the continuous operating time (fourth threshold) of the fuel cell system at which time the water level of the cooling water tank 5 is presumed to become a predetermined threshold (third threshold) or lower by evaporation of the cooling water at the time of the operation of the fuel cell system. The predetermined threshold of the water level of the cooling water tank 5 will be explained in detail later.
When the continuous electric power generating time is not the first threshold or more (NO in Step S11), the electric power generation continues (Step S10). Then, when the continuous electric power generating time becomes the first threshold or more (YES in Step S15), the control unit 15 outputs the operation stop command to stop the operation of the first pump 9 that is the water feeding device (Step S12). Specifically, the first pump 9 is controlled by PWM (pulse width modulation) herein, and the control unit 15 sets the duty of the first pump 9 to 0%. With this, the first pump 9 stops operating. At this time, the water level of the cooling water of the cooling water tank 5 is decreased to a predetermined threshold (third threshold) or lower.

Next, the control unit 15 closes the reforming water valve 75 (Step S13). With this, the supply of the reforming water to the reformer 71 of the hydrogen generator 2 stops. Meanwhile, since the supply of the raw material through the material supplying passage 17 to the reformer 71 of the hydrogen generator 2 also stops, the supply of the fuel gas to the fuel cell 1 stops, and the electric power generating operation of the fuel cell system stops.

After that, the control unit 15 shifts to the water supply control performed after the electric power generating operation of the system stops (Step S14).
Next, the water supply control (Step S14) performed after the electric power generating operation of the system stops will be explained.
As shown in Fig. 7, in the water supply control performed after the electric power generating operation of the system stops, after the predetermined stop operation (for example, a cooling operation of the hydrogen generator 2) of the fuel cell system is completed, the operation allowing device 74 in the control unit 15 changes from the start-up not-allowing state in which the control unit 15 does not output the start-up command of the fuel cell system even if the start-up request is detected, to the stand-by state in which the control unit 15 outputs the start-up command if the start-up request is detected (Step S30). Then, in the stand-by state, the operation of supplying the cooling water to the cooling water tank 5 starts. First, the cooling water valve 76 opens (Step S31).

Next, the control unit 15 starts the operation of the first pump 9 that is the water feeding device (Step S32). With this, the recovered water in the recovered water tank 7 is supplied to the cooling water tank 5 as the cooling water. Note that the first pump 9 is operated by maximum rating (duty: 100%).

Next, the control unit 15 starts measuring a cooling water supply operating time (Step S33). The cooling water supply operating time is measured by the timer means of the control unit 15 and is stored in the memory device 72.

Next, the control unit 15 determines whether or not the cooling water supply operating time is a sixth threshold or more (Step S34). The sixth threshold is predetermined based on the water level of the cooling water tank 5 which level goes up as the cooling water is supplied to the cooling water tank 5 by the first pump. The sixth threshold is stored in the memory device 72. The sixth threshold is suitably determined by an experiment, a simulation, or the like. For example, the sixth threshold is set to a supply operating time at which the water level of the cooling water tank 5 which level goes up as the cooling water is supplied is presumed to become an upper limit water level or more. Note that the upper limit water level is a predetermined water level higher than the lower limit water level, and may be the position of the water returning passage 14 for example. In this case, the sixth threshold is defined as a time equal to or more than a supply operating time at which the cooling water starts overflowing through the water returning passage 14.

Next, in a case where the cooling water supply operating time is less than the sixth threshold (NO in Step S34), the control unit 15 determines whether or not the start-up command of the system in association with the start-up request is detected (Step S35). When the start-up command of the system is detected, the process proceeds to Step S36 described below. When the start-up command of the system is not detected, the measurement of the cooling water supply operating time continues (Step S34). During this time, the operation of supplying the cooling water continues.

Then, when the cooling water supply operating time becomes the sixth threshold or more (NO in Step S34), the control unit 15 stops the operation of the first pump 9 that is the water feeding device (Step S36). Also, when the start-up command of the system is detected in Step S35 described above, the control unit 15 stops the operation of the first pump 9 that is the water feeding device.

Next, the control unit 15 closes the cooling water valve 76 (Step S37). With this, the supply of the cooling water to the cooling water tank 5 stops. When the start-up command of the system is not detected in Step S35, the entire amount of cooling water to be supplied to the cooling water tank 5 is supplied to the cooling water tank 5. In contrast, when the start-up command of the system is detected in Step S35, the operation of supplying the cooling water stops. Therefore, only a part of the amount of cooling water to be supplied to the cooling water tank 5 is supplied to the cooling water tank 5.

Next, the control unit 15 stops the measurement of the cooling water supply operating time (Step S38).

Next, the control unit 15 updates the first threshold by the threshold setting device (Step S39). Here, the first threshold is set as a time at which the amount of cooling water supplied in the cooling water supply operating time is completely consumed by, for example, evaporation of the cooling water at the time of the continuous electric power generating operation of the restarted fuel cell system. With this, when the start-up command of the system is detected in Step S35, and only a part of the amount of cooling water to be supplied to the cooling water tank 5 is supplied to the cooling water tank 5, the first threshold becomes smaller than the initial value, so that a time during which the restarted fuel cell system can continuously operate becomes short. Needless to say, when the start-up command of the system is not detected in Step S35, the first threshold is updated to the initial value. Moreover, after the first threshold is updated, the cooling water supply operating time stored in the memory device 72 is reset to zero.

After that, the control unit 15 terminates the water control performed when the system is not operating.

The following effects can be obtained by the fuel cell system of Embodiment 3 explained above.

In a case where the recovered water is supplied to both the reformer 71 of the hydrogen generator 2 and the cooling water tank 5 when the fuel cell system is operating, the amount of steam supplied to the reformer 71 changes as the amount of electric power generated in the fuel cell 1 changes, i.e., the internal pressure of the reformer 71 changes. Therefore, it is difficult to divide the recovered water into the water supplied to the reformer 71 of the hydrogen generator 2 and the water supplied to the cooling water tank 5 at a predetermined ratio. On this account, it is difficult to cause the S/C in the reformer 71 of the hydrogen generator 2 to be maintained to a predetermined value (3.0). However, in Embodiment 3, the supply of the cooling water to the cooling water tank 5 is carried out when the fuel cell system is not operating, and is not carried out when the fuel cell system is operating. To be specific, since the cooling water valve 76 is closed when the fuel cell system is operating, problems reduces, such as a problem in which the S/C in the reformer 71 of the hydrogen generator 2 cannot be easily maintained to the predetermined value (3.0) since the amount of water supplied to the second water passage increases by the increase in the internal pressure of the reformer 71. Thus, the S/C in the reformer 71 can be easily maintained to the predetermined value (3.0). Moreover, in Embodiment 3, the water level which lowers as the amount of cooling water decreases at the time of the electric power generating operation of the fuel cell system is not directly detected, but is detected using as an index the continuous electric power generating operation time of the fuel cell system. Therefore, a sensor for detecting the water level of the cooling water tank 5 can be omitted.

The above configuration does not assume that the fuel cell system stops in the electric power generating sequence of Step S10 in accordance with the system stop command, but may assume it. In this case, the fuel cell system may be configured such that the water supply control of Embodiment 7 is carried out when the fuel cell system stops in the electric power generating sequence of Step S10 in accordance with the system stop command (see Embodiment 7 for details).

### Embodiment 4

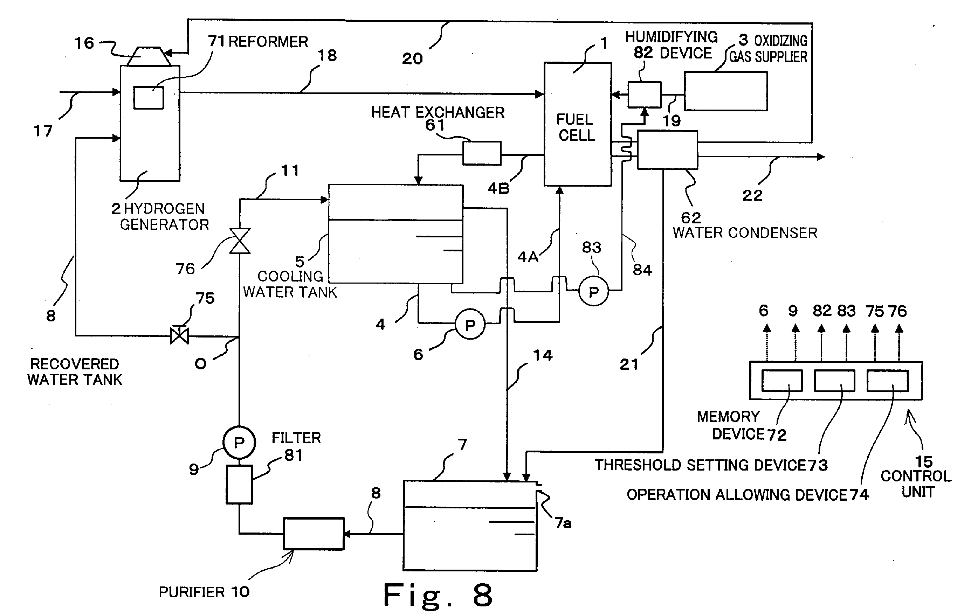

Fig. 8 is a block diagram showing the configuration of the fuel cell system according to Embodiment 4 of the present invention.

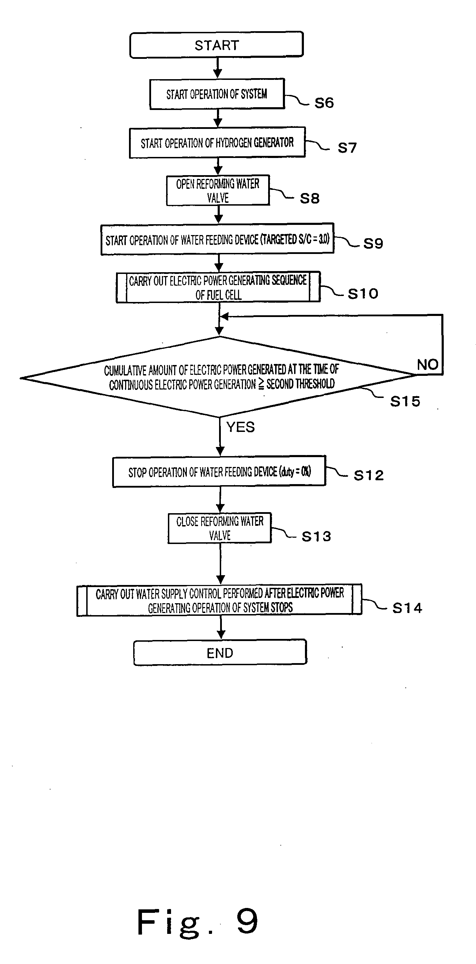

Fig. 9 is a flow chart showing contents of the water supply control performed when the fuel cell system according to Embodiment 4 of the present invention is operating.

As shown in Fig. 8, in Embodiment 4, a humidifying device 82 is disposed on the oxidizing gas supplying passage 19 as one example of a water utilizing device. A humidifying water supplying passage 84 is formed to extend from the cooling water tank 5 to the humidifying device 82, and a third pump 83 is disposed on the humidifying water supplying passage 84. With this, the water in the cooling water tank 5 is supplied to the humidifying device 82 by the third pump 83, and the humidifying device 82 uses the water to humidify the oxidizing gas flowing through the oxidizing gas supplying passage 19. The operations of the humidifying device 82 and the third pump 84 are controlled by the control unit 15. Moreover, as shown in Fig. 9, in Embodiment 4, the supply of the recovered water to the cooling water tank 5 is carried out using as an index the cumulative amount of electric power generated at the time of the continuous electric power generating operation of the fuel cell system (hereinafter referred to as "the cumulative amount of electric power generated at the time of the continuous electric power generating operation"). Other than these, the present embodiment is the same as Embodiment 3.
Specifically, in Embodiment 3, the control unit 15 shifts to the electric power generating sequence of the fuel cell 1 in Step S10, and then determines whether or not the cumulative amount of electric power generated at the time of the continuous electric power generating operation of the fuel cell system is a second threshold or more (Step S15). The cumulative amount of electric power generated at the time of the continuous electric power generating operation is obtained by the control unit 15 using an integrating wattmeter or calculation, and is stored in the memory device 72. Here, the cumulative amount of electric power generated at the time of the continuous electric power generating operation denotes the cumulative amount of electric power generated in a period during which the fuel cell system continues to generate electric power. When the fuel cell system stops generating the electric power, the cumulative amount of electric power generated at the time of the continuous electric power generating operation is reset to zero. Moreover, the cumulative amount of electric power generated includes not only the cumulative amount of electric power generated but also cumulative amounts of parameters correlated with the cumulative amount of electric power generated. Examples are the cumulative amount of electric power generating time, the cumulative amount of raw material supplied to the hydrogen generator 2, the cumulative amount of reforming water supplied to the hydrogen generator 2, and the cumulative amount of air supplied to the cathode of the fuel cell 1. The second threshold is set by the threshold setting device 73. An initial value of the second threshold is predetermined based on the water level of the cooling water tank which level lowers at the time of the continuous electric power generation of the fuel cell system in accordance with the amount of electric power generated. The initial value of the second threshold is set in the threshold setting device 73. Then, as will be described later, the initial value of the second threshold is updated in accordance with the amount of cooling water supplied (Step S14). The initial value of the second threshold is suitably determined by an experiment, a simulation, or the like. For example, the initial value of the second threshold is set such that it is possible to detect that the water level of the cooling water tank 5 is approaching to the lower limit water level as the cooling water decreases in accordance with the amount of electric power generated at the time of the continuous electric power generation. Specifically, the initial value of the second threshold is set to the cumulative amount of electric power generated, at which amount the water level of the cooling water tank 5 is presumed to become a predetermined water level equal to or higher than the lower limit water level due to the decrease in the cooling water in accordance with the amount of electric power generated at the time of the continuous electric power generation. The fuel cell system of Embodiment 4 is configured such that: the water in the cooling water tank 5 is supplied to the water utilizing device at the time of the electric power generating operation; and the amount of water supplied to the water utilizing device is proportional to the amount of electric power generated by the fuel cell 1. Here, for example, the initial value of the second threshold is determined as the cumulative amount (fifth threshold) of electric power generated at the time of the continuous electric power generating operation of the fuel cell system, at which amount the water level of the cooling water tank 5 is presumed to become a predetermined threshold (third threshold) or less by the supply of the water to the water utilizing device of the fuel cell system at the time of the electric power generating operation of the fuel cell system. Herein, one example of the water utilizing device is the humidifying device 82 configured to humidify the oxidizing gas supplied to the cathode of the fuel cell. However, the humidifying device 82 is just one example, and the water utilizing device configured to utilize the water in the cooling water tank during the electric power generating operation is not limited to this. Moreover, the initial value of the second threshold may be determined as the cumulative amount (fifth threshold) of electric power generated at the time of the continuous electric power generating operation of the fuel cell system, at which amount the water level of the cooling water tank 5 is presumed to become the predetermined threshold (third threshold) or less in consideration of not only the supply of the water to the water utilizing device of the fuel cell system at the time of the operation of the fuel cell system but also the evaporation of the cooling water in the cooling water tank 5.
Moreover, in the water supply control (Step S14) performed after the electric power generation of the system stops, the second threshold is updated in the same manner as the first threshold in Embodiment 3.

The same effects as Embodiment 3 can be obtained in Embodiment 4 described above.

The above configuration does not assume that the fuel cell system stops in the electric power generating sequence of Step S10 in accordance with the system stop command, but may assume it. In this case, the fuel cell system may be configured such that the water supply control of Embodiment 7 is carried out when the fuel cell system stops in the electric power generating sequence of Step S10 in accordance with the system stop command (see Embodiment 7 for details).

### Embodiment 5

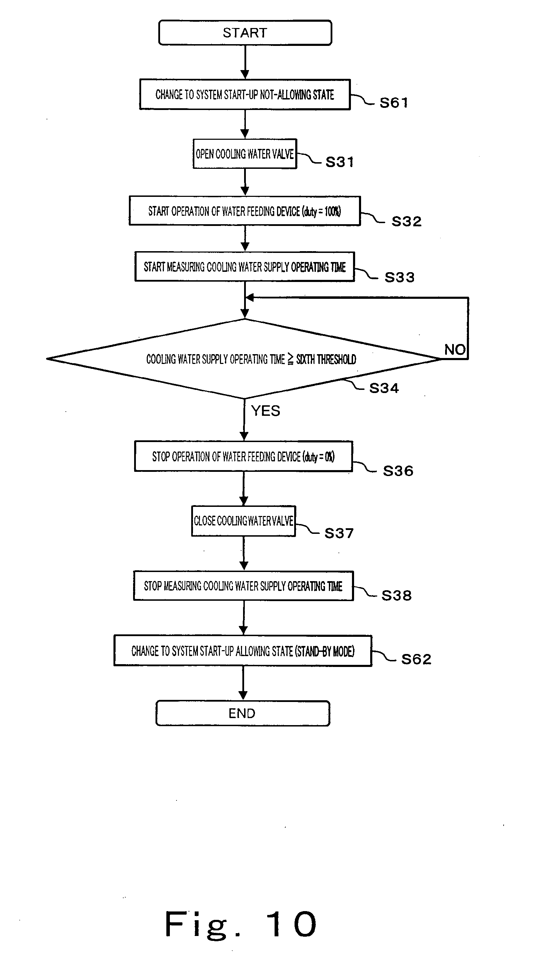

Fig. 10 is a flow chart showing contents of the water supply control performed when the fuel cell system according to Embodiment 5 of the present invention is not operating.
The fuel cell system of Embodiment 5 is the same in basic configuration as that of Embodiment 3. However, as shown in Fig. 10, in the fuel cell system of Embodiment 5, contents of the water supply control performed after the electric power generating operation of the system stops are changed.
Specifically, as shown in Fig. 10, in the water supply control performed after the electric power generating operation of the system stops, the operation allowing device 74 in the control unit 15 does not allow the start-up of the fuel cell system even if the start-up request is detected, and changes to the start-up not-allowing state in which the control unit 15 does not output the start-up command (Step S61). After that, the operation of supplying the cooling water to the cooling water tank 5 starts. To be specific, the operation of supplying the cooling water is carried out as the stop operation of the fuel cell system.
Therefore, even if the operation of supplying the cooling water starts, and the start-up request of the system is detected while the system is standing by until the cooling water supply operating time reaches the sixth threshold (while the operation of supplying the cooling water is being carried out), the operation allowing device 74 does not allow the operation start of the system. Then, when the cooling water supply operating time becomes the sixth threshold or more, the operation of supplying the cooling water terminates (Steps S36 to S38). By the above control of the operation allowing device 74, the operation of supplying the cooling water is carried out without interruption, and the entire amount of cooling water to be supplied to the cooling water tank 5 is supplied to the cooling water tank 5. Therefore, the initial value of the first threshold does not have to be updated unlike Embodiment 3.
After the operation of supplying the cooling water is completed (Steps S36 to S38), the operation allowing device 74 in the control unit 15 allows the start-up when the start-up request is detected, and changes to the stand-by state, i.e., a state in which the system can quickly shift to the start-up operation (Step S62).
As above, in the fuel cell system of Embodiment 5, as long as the operation of supplying the cooling water is not completed, the operation start of the fuel cell system is not allowed. Here, in the present invention, the completion of the operation of supplying the cooling water denotes that the entire amount of cooling water to be supplied to the cooling water tank 5 in the operation of supplying the cooling water is supplied to the cooling water tank 5 as described above, and then the water feeding device (herein, the first pump 9) stops.
In Embodiment 4, the control unit 15 may be configured to carry out the same control as the fuel cell system of Embodiment 5 using the operation allowing device 74. In this case, the step of updating the second threshold by the threshold setting device 73 is unnecessary.

### Embodiment 6

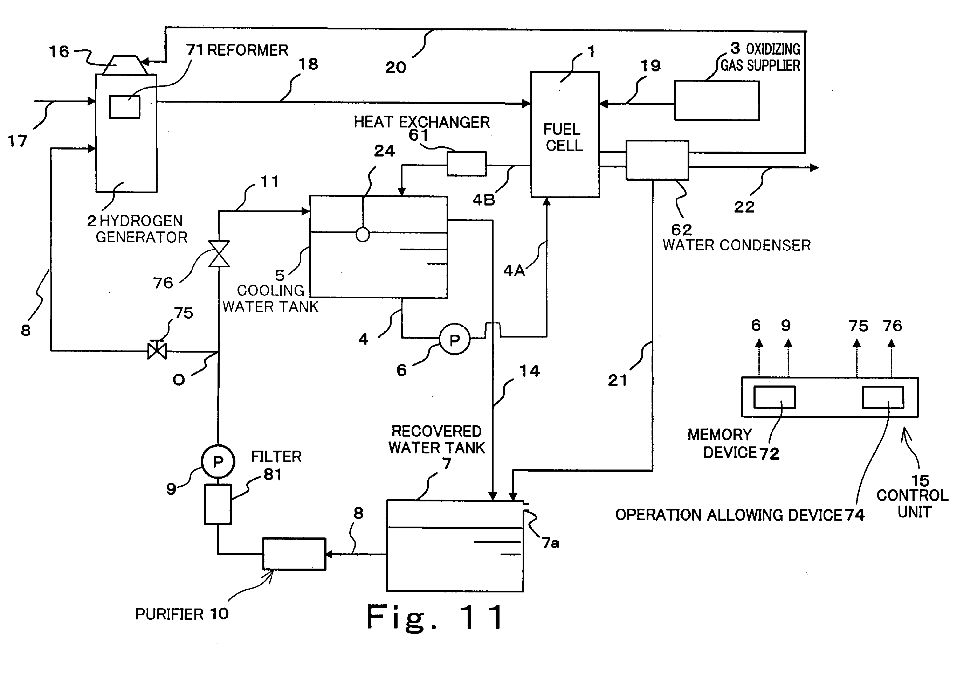

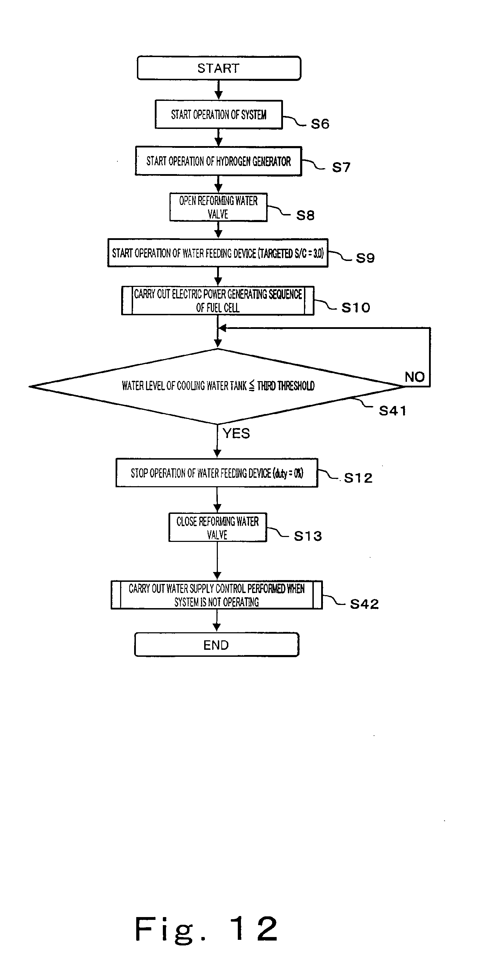

Fig. 11 is a block diagram showing the configuration of the fuel cell system according to Embodiment 6 of the present invention. Fig. 12 is a flow chart showing contents of the water supply control performed when the fuel cell system according to Embodiment 6 of the present invention is operating.
As shown in Fig. 11, the fuel cell system of Embodiment 6 is the same in basic configuration as that of Embodiment 3, but the following points are mainly different therebetween. Hereinafter, the different configurations and operations will be mainly explained, and explanations of the configurations and operations common to those of Embodiment 3 are omitted.

The fuel cell system of Embodiment 6 includes the water level detector 24 configured to detect the water level of the cooling water tank 5. The water level detected by the water level detector 24 is input to the control unit 15. Moreover, the control unit 15 does not include the threshold setting device 73 of Embodiment 3.

Next, the water supply control performed when the fuel cell system of Embodiment 6 configured as above is operating will be explained.

As shown in Fig. 12, in Embodiment 6, the control unit 15 shifts to the electric power generating sequence of the fuel cell 1 in Step S10, and then determines whether or not the water level of the cooling water tank 5 detected by the water level detector 24 is the third threshold or less (Step S41). Here, the third threshold is suitably determined based on an allowable water level of the cooling water tank 5. In Embodiment 6, the third threshold is determined as an allowable lower limit water level. Note that the lower limit water level is defined as a water level at which the cooling water in the cooling water tank 5 can be circulated to recover the exhaust heat of the fuel cell 1.

The electric power generation continues when the water level of the cooling water tank 5 exceeds the third threshold (NO in Step S41, S10). In contrast, when the water level of the cooling water tank 5 is the third threshold or less, the control unit 15 outputs the operation stop command to stop the operation of the first pump that is the water feeding device (Step S12). With this, the operation of the fuel cell system also stops.
The reforming water valve 75 closes (Step S13), and then, the water supply control performed after the electric power generating operation of the system stops is carried out (Step S42). In the water supply control performed after the electric power generating operation of the system stops, the cooling water valve 76 opens, and then, the first pump 9 is operated by maximum rating to supply the cooling water to the cooling water tank 5. Then, when the water level of the cooling water tank 5 detected by the water level detector 24 becomes equal to or more than a predetermined value larger than the third threshold, or when the cooling water supply operating time becomes equal to or more than a predetermined time threshold at which the cooling water in the cooling water tank 5 is presumed to overflow through the water returning passage 14, the control unit 15 stops the operation of the first pump 9, and then closes the cooling water valve 76. With this, the water supply control performed when the system is not operating is completed.
In accordance with the fuel cell system of Embodiment 6, the lowering of the water level of the cooling water tank 5 is directly detected by the water level detector 24, and the operation of supplying the cooling water is carried out based on this detection. Therefore, it is possible to reduce the possibility that the system continues to operate even if the water level is equal to or lower than the allowable lower limit water level of the fuel cell system, and this excessively increases the temperature of the fuel cell 1 to cause the trouble of the fuel cell 1.

### Embodiment 7

Embodiment 7 of the present invention exemplifies a case where the cooling water is supplied to the cooling water tank 5 when the fuel cell system stops the electric power generating operation before the water level of the cooling water in the cooling water tank 5 of the fuel cell system approaches to the lower limit water level (for example, in a state in which the continuous electric power generating operation time of the fuel cell system is less than the first threshold, or in a state in which the cumulative amount of electric power generated at the time of the continuous electric power generating operation is less than the second threshold).

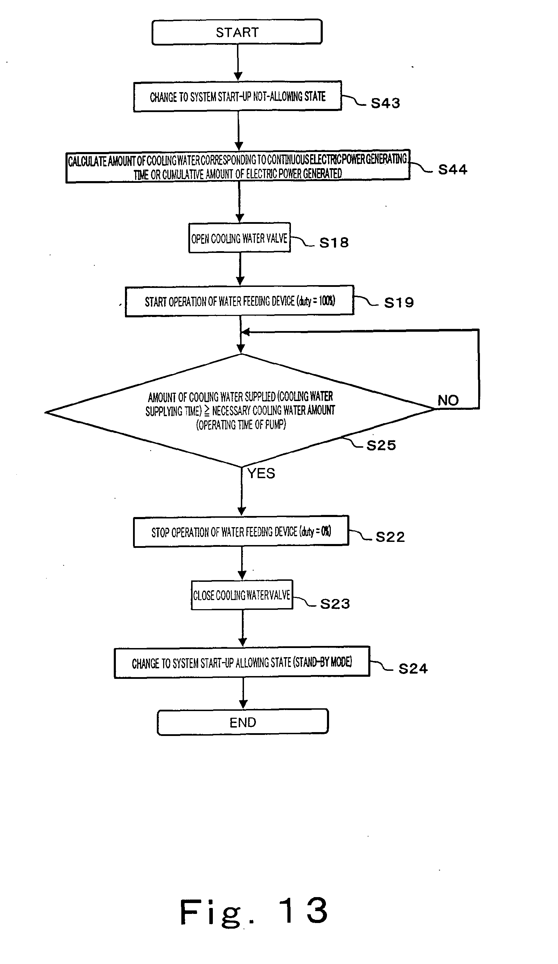

Fig. 13 is a flow chart showing contents of the water supply control in the fuel cell system according to Embodiment 7 of the present invention.
The fuel cell system of Embodiment 7 is the same in basic configuration as that of Embodiment 3. The control unit 15 of the fuel cell system of Embodiment 7 includes the threshold setting device 73 of Embodiment 3, but the threshold setting device 73 may be omitted.
As shown in Fig. 13, as with Embodiment 3, in the water supply control, the control unit 15 measures the continuous electric power generating time of the fuel cell system at the time of the electric power generating operation of the system. Then, as with Embodiment 5, when the electric power generating operation of the fuel cell system stops, the operation allowing device 74 in the control unit 15 does not allow the start-up of the fuel cell system even if the start-up request is detected, and changes to the start-up not-allowing state in which the control unit 15 does not output the start-up command (Step S43). After that, the operation of supplying the cooling water to the cooling water tank 5 starts. To be specific, the operation of supplying the cooling water is carried out as the stop operation of the fuel cell system.
In the operation of supplying the cooling water, first, calculated is the amount of cooling water supplied (hereinafter referred to as "necessary cooling water amount") which amount is necessary in the cooling water supplying operation performed after the electric power generating operation of the fuel cell system stops (Step S44). The necessary cooling water amount is calculated as a value corresponding to the continuous electric power generating time (Step S44). For example, the necessary cooling water amount is defined as the amount of cooling water necessary to increase the water level of the cooling water tank 5 from the water level having lowered at the time of the continuous electric power generating operation to the water level at the start of (or in an early period of) the electric power generating operation. Since the amount of cooling water decreased is large when the continuous electric power generating operation time is long, the necessary cooling water amount becomes large. Moreover, since the amount of cooling water decreased is comparatively small when the continuous electric power generating operation time is short, the necessary cooling water amount becomes small. For example, a necessary cooling water amount calculating formula obtained by an experiment, a simulation, or the like is used to calculate the necessary cooling water amount. The fuel cell system may be configured such that as with Embodiment 4, in Step S43, the cumulative amount of electric power generated at the time of the continuous electric power generating operation of the fuel cell system is measured, and the necessary cooling water amount corresponding to the cumulative amount of electric power generated at the time of the continuous electric power generating operation is calculated.
Then, the cooling water valve 75 opens (Step S18), and then, the first pump 9 that is the water feeding device starts operating (Step S19). The first pump 9 is operated by maximum rating. With this, the cooling water is supplied to the cooling water tank 5.
Next, the control unit 15 determines whether or not the amount of cooling water supplied is the necessary cooling water amount or more (Step S25). Whether or not the amount of cooling water supplied is the necessary cooling water amount or more may be determined by directly detecting the amount of water supplied to the cooling water tank 5 and determining whether or not the detected value is the necessary cooling water amount or more. As an indirect method, for example, whether or not the amount of cooling water supplied is the necessary cooling water amount or more may be determined by detecting the operating time of the first pump and determining whether or not the detected value is equal to or more than a predetermined time threshold at which the amount of cooling water supplied to the cooling water tank 5 is presumed to become the necessary cooling water amount by the operation of supplying the cooling water.
In a case where the amount of cooling water supplied is less than the necessary cooling water amount (NO in Step S25), the operation allowing device 74 does not allow the operation start of the system even if the start-up request of the system is detected.
Then, the system stands by until the amount of cooling water supplied becomes the necessary cooling water amount or more (Step S25). During this time, the operation of supplying the cooling water continues.

Then, when the amount of cooling water supplied becomes the necessary cooling water amount or more (YES in Step S25), the control unit 15 stops the operation of the first pump 9 that is the water feeding device (Step S22).
Next, the control unit 15 closes the cooling water valve 76 (Step S23). With this, the operation of supplying the cooling water to the cooling water tank 5 stops. By the above control of the operation allowing device 74, the operation of supplying the cooling water is carried out without interruption, and the necessary cooling water amount is entirely supplied to the cooling water tank 5. Therefore, the initial value of the first threshold or the second threshold does not have to be updated. Then, after the operation of supplying the cooling water is completed (Steps S22 and S23), the operation allowing device 74 in the control unit 15 allows the start-up when the start-up request is detected, and changes to the stand-by state, i.e., a state in which the system can quickly shift to the start-up operation (Step S62).
The start-up allowing device 74 may be configured to allow the start-up when the start-up request is detected before starting the operation of supplying the cooling water (before Step S44), and change to the stand-by state in which the system can quickly shift to the start-up operation. In this case, before the amount of cooling water supplied is determined as the necessary cooling water amount or more in Step S25, the start-up request may be detected, the start-up allowing device 74 may allow the start-up, and the control unit 15 may start the start-up operation. As above, in a case where the operation of supplying the cooling water is interrupted, and the system shifts to the start-up operation, the first threshold or the second threshold may be updated as with Embodiments 3 and 4. To be specific, the first threshold or the second threshold is set as a time at which the amount of cooling water supplied in the cooling water supply operating time is completely consumed by the evaporation of the cooling water or the supply of the water to the water utilizing device at the time of the continuous electric power generating operation of the restarted fuel cell system.
The same effects as Embodiment 3 can be obtained by the fuel cell system of Embodiment 7 described above.

### Embodiment 8

Embodiment 8 of the present invention exemplifies a case where the cooling water is supplied to the cooling water tank 5 in the start-up operation of the fuel cell system.

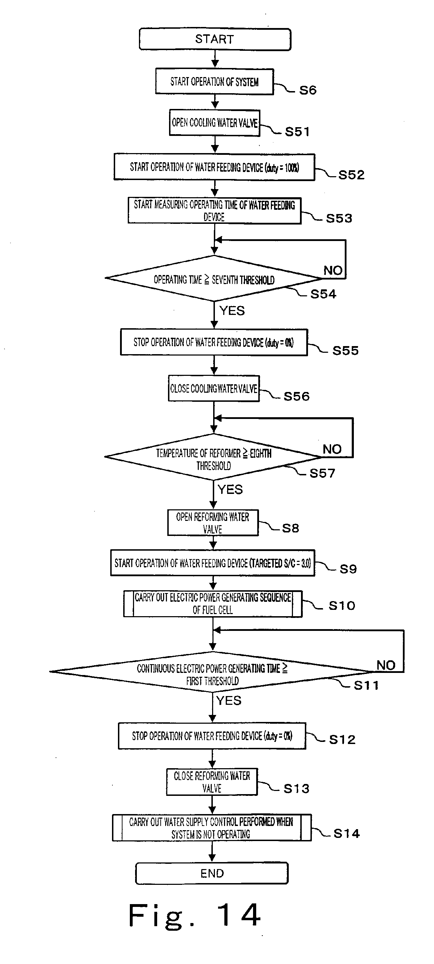

Fig. 14 is a flow chart showing contents of the water supply control performed at the time of the start-up of the fuel cell system according to Embodiment 8 of the present invention.

The fuel cell system of Embodiment 8 is the same in basic configuration as that of Embodiment 3. However, in the fuel cell system of Embodiment 8, before the supply of the reforming water to the hydrogen generator 2 starts or before the hydrogen generator 2 starts the fuel gas generating operation, the first pump 9 operates to supply the cooling water in the start-up operation of the fuel cell system.
Specifically, as shown in Fig. 14, in Embodiment 8, when the operation of the fuel cell system starts (i.e., when the start-up operation starts) (Step S6), the control unit 15 opens the cooling water valve 76 (Step S51).

Next, the control unit 15 starts the operation of the first pump 9 that is the water feeding device by maximum rating (Step S52), and starts measuring the operating time of the first pump 9 (Step S53). With this, the cooling water is supplied to the cooling water tank 5. Then, when the operating time of the first pump 9 becomes a seventh threshold or more, the control unit 15 stops the operation of the first pump 9 (Step S54), and closes the cooling water valve 76 (Step S55).

Next, the control unit 15 stands by until the temperature of the reformer 71 becomes an eighth threshold or more by the operation of increasing the temperature of the hydrogen generator 2 (Step S56). Here, in Embodiment 8, the reformer 71 is provided with a temperature detector (not shown), and a detection signal of the temperature detector is input to the control unit 15. The control unit 15 detects the temperature of the reformer 71 based on the detection signal. Moreover, the eighth threshold is set to a temperature of the reformer at which temperature the hydrogen generator 2 can generate the fuel gas whose CO concentration is reduced to a predetermined level or less.

When the temperature of the reformer 71 becomes the eighth threshold or more (YES in Step S56), the control unit 15 starts the fuel gas generating operation of the hydrogen generator 2. Steps after Step S56 are totally the same as those of Embodiment 1, so that explanations thereof are omitted.

In accordance with the fuel cell system of Embodiment 8 described above, before the supply of the reforming water to the hydrogen generator 2 starts or before the hydrogen generator 2 starts the fuel gas generating operation, removal of air in the first pump 9 can be carried out by the operation of supplying the cooling water. Therefore, the possibility of the occurrence of the air ingestion when starting the supply of the water to the hydrogen generator 2 or when starting the supply of the water for the fuel gas generating operation of the hydrogen generator 2 is reduced. Thus, the water supply can be more stably carried out.
The operation of supplying the cooling water described in Embodiments 3 to 7 is carried out in the stop operation performed after the electric power generating operation of the fuel cell system stops or in the stand-by state set after the stop operation is completed. However, the operation of supplying the cooling water may be carried out in the start-up operation of the fuel cell system before the supply of the reforming water to the hydrogen generator 2 starts or before the hydrogen generator 2 starts the fuel gas generating operation.
From the foregoing explanation, many modifications and other embodiments of the present invention are obvious to one skilled in the art. Therefore, the foregoing explanation should be interpreted only as an example, and is provided for the purpose of teaching the best mode for carrying out the present invention to one skilled in the art. The structures and/or functional details may be substantially modified within the spirit of the present invention.

### Industrial Applicability

The fuel cell power generating system of the present invention is configured such that tanks are not separately provided to separate the cooling water system and the reforming water system, and the number of pumps for supplying water to the cooling water system and the reforming water system is smaller than before. Thus, the fuel cell power generating system of the present invention can prevent impurities of the cooling water system from getting mixed in the reforming water, and is useful as a fuel cell system for domestic use for example.

## Claims

1. A fuel cell system comprising: a hydrogen generator including a reformer configured to generate a hydrogen-containing fuel gas from a raw material and steam; a fuel cell configured to generate electric power using the fuel gas supplied from the hydrogen generator and an oxidizing gas; a cooling water passage through which cooling water for cooling down the fuel cell flows; a cooling water tank configured to store the cooling water; a recovered water tank configured to store water recovered from at least one of the fuel gas and the oxidizing gas discharged from the fuel cell; a first water passage connecting the recovered water tank and the reformer; a second water passage branching from the first water passage and connected to the cooling water tank; and a water feeding device disposed on the first water passage so as to be located upstream of a branch portion where the second water passage branches from the first water passage, wherein the water feeding device operates to supply water from the recovered water tank to the reformer or the cooling water tank.

2. The fuel cell system according to claim 1, further comprising a flow divider configured to divide the water supplied from the recovered water tank into water supplied to the first water passage and water supplied to the second water passage, wherein the flow divider is configured to divide the water into the water supplied to the first water passage and the water supplied to second water passage at a predetermined water dividing ratio.

3. The fuel cell system according to claim 1, further comprising a purifier configured to purify the water supplied from the recovered water tank, wherein the purifier is disposed on the second water passage.

4. The fuel cell system according to claim 1, further comprising a purifier disposed on the first water passage so as to be located upstream of the branch portion and configured to purify the water supplied from the recovered water tank, wherein: the water supplying device is disposed downstream of the purifier; and a filter is disposed on the first water passage extending between the water supplying device and the purifier.

5. The fuel cell system according to claim 1, wherein the water feeding device is disposed at a position lower than a drain outlet of the recovered water tank.

6. The fuel cell system according to claim 1, wherein the water feeding device is disposed at a position lower than a lower limit water level of the recovered water tank.

7. The fuel cell system according to claim 1, wherein the water feeding device is disposed at a position lower than a bottom of the recovered water tank.

8. The fuel cell system according to claim 1, further comprising: a switching unit configured to switch a destination to which the water from the recovered water tank is supplied, between the hydrogen generator and the cooling water tank; and a control unit, wherein the control unit is configured to control the switching unit such that the water is supplied to the hydrogen generator during a fuel gas generating operation of the hydrogen generator, and to carry out a cooling water supplying operation in which the switching unit is switched to the cooling water tank and the water supplying device is caused to operate in a period from stop of the fuel gas generating operation to subsequent start of the fuel gas generating operation.

9. The fuel cell system according to claim 8, wherein the control unit is configured to stop an electric power generating operation of the fuel cell system and carry out the cooling water supplying operation when a continuous electric power generating operation time of the fuel cell system becomes a first threshold or more.

10. The fuel cell system according to claim 8, wherein the control unit is configured to stop an electric power generating operation of the fuel cell system and carry out the cooling water supplying operation when a cumulative amount of electric power generated at the time of a continuous electric power generating operation of the fuel cell system becomes a second threshold or more.

11. The fuel cell system according to claim 8, wherein the control unit is configured to stop an electric power generating operation of the fuel cell system and carry out the cooling water supplying operation when a water level of the cooling water tank becomes a third threshold or less.

12. The fuel cell system according to claim 8, wherein the control unit is configured to stop an electric power generating operation of the fuel cell system and carry out the cooling water supplying operation when a continuous electric power generating operation time of the fuel cell system becomes equal to or more than a fourth threshold at which a water level of the cooling water tank is presumed to become a third threshold or less.

13. The fuel cell system according to claim 8, wherein the control unit is configured to stop an electric power generating operation of the fuel cell system and carry out the cooling water supplying operation when a cumulative amount of electric power generated at the time of a continuous electric power generating operation of the fuel cell system becomes equal to or more than a fifth threshold at which a water level of the cooling water tank is presumed to become a third threshold or less.

14. The fuel cell system according to claim 8, wherein the control unit is configured to stop an electric power generating operation of the fuel cell system and carry out the cooling water supplying operation when a cumulative amount of electric power generated at the time of a continuous electric power generating operation of the fuel cell system becomes equal to or more than a fifth threshold at which a water level of the cooling water tank is presumed to become a third threshold or less.

15. The fuel cell system according to claim 11, further comprising a water level detector configured to detect the water level of the cooling water tank, wherein the control unit is configured to stop the electric power generating operation of the fuel cell system when the water level detected by the water level detector is the third threshold or less.

16. The fuel cell system according to claim 9, further comprising an operation allowing device configured not to allow an operation start of the fuel cell system until the cooling water supplying operation is completed.

17. The fuel cell system according to claim 9, further comprising a threshold setting device configured to set the time threshold, wherein the threshold setting device is configured to update the first threshold in accordance with an operating time of the cooling water supplying operation performed previously.

18. The fuel cell system according to claim 8, wherein the control unit is configured to cause the water feeding device to operate such that the cooling water the amount of which corresponds to a continuous electric power generating operation time of the fuel cell system or a cumulative amount of electric power generated is supplied to the cooling water tank in the cooling water supplying operation.

19. The fuel cell system according to claim 14 or 15, further comprising: an overflow port included in the cooling water tank; and a water returning passage through which overflow water returns to the recovered water tank from the overflow port.

20. The fuel cell system according to claim 1, further comprising: a switching unit configured to switch a destination to which the water from the recovered water tank is supplied, between the hydrogen generator and the cooling water tank; and a control unit, wherein the control unit is configured to control the water feeding device and the switching unit such that supply of the water to the hydrogen generator starts after the water is supplied to the cooling water tank in a start-up operation.

21. The fuel cell system according to claim 1, further comprising: a switching unit configured to switch a destination to which the water from the recovered water tank is supplied, between the hydrogen generator and the cooling water tank; and a control unit, wherein the control unit is configured to control the water feeding device and the switching unit such that supply of the water to the hydrogen generator for a fuel gas generating operation starts after the water is supplied to the cooling water tank in a start-up operation.

22. The fuel cell system according to claim 1, wherein: the cooling water tank is disposed above the recovered water tank; a supply port through which the water is supplied to the cooling water tank from the second water passage is formed at a position higher than an outlet port of the water in the cooling water tank; and the fuel cell system is configured to supply the water from the recovered water tank to both the reformer and the cooling water tank while the fuel cell system is operating.
